# EUROPEAN PATENT APPLICATION

(11) **EP 4 694 207 A1**
(43) Date of publication of application: **11.02.2026**
(21) Application number: 24778947.2
(22) Date of filing: 27.02.2024
(51) Int. Cl.: H04R 25/00, H04R 3/00

(54) **ACOUSTIC PROCESSING DEVICE, INFORMATION TRANSMISSION DEVICE, AND ACOUSTIC PROCESSING SYSTEM**

(30) Priority: 31.03.2023 JP 2023059482
(71) Applicant: Sony Group Corporation, Tokyo 108-0075 (JP)
(72) Inventor: MATSUMOTO, Kyosuke, Tokyo 108-0075 (JP)
(74) Representative: D Young & Co LLP
(86) International application number: PCT/JP2024/006914
(87) International publication number: WO 2024/202805

(57) **Abstract**

Provided is an acoustic processing device worn on a body of a user, the acoustic processing device including: a sound collection unit that acquires an environmental sound around the user; a reception unit that receives feature information for a specific voice included in a voice output from an acoustic output device to the user; a processing unit that performs acoustic processing on the environmental sound around the user collected by the sound collection unit based on the feature information; and an output unit that outputs the environmental sound processed by the processing unit to the user.

## Description

### Field

The present disclosure relates to an acoustic processing device, an information transmission device, and an acoustic processing system.

### Background

A hearing aid (acoustic processing device) has been widely used as a device for compensating user's hearing. For example, the hearing aid includes a microphone, a receiver, and the like, and is worn on a part of a body of a user. The hearing aid collects a sound around the user, performs processing such as amplification on the collected sound according to auditory characteristics of the user, and outputs the sound to the user.

### Citation List

### Patent Literature

Patent Literature 1: JP 2008-11527 A

### Summary

### Technical Problem

Since reverberations are included, it may be difficult for the user wearing the hearing aid to hear an output voice from the acoustic output device such as a speaker installed in a building. Further, in order to solve such hearing difficulty, it is also conceivable to stream (distribute) a content to the hearing aid. If different voices, such as a voice of the content streamed and output to the hearing aid and a voice captured as an external sound in the hearing aid, overlap, it is difficult for the user of the hearing aid to hear the voice. Furthermore, even in a case where the voice of the content streamed and output to the hearing aid and the voice output from the acoustic output device and captured as the external sound in the hearing aid are the same, since there is a deviation caused by a delay or the like due to streaming, different sounds overlap at different times, and it is difficult for the user of the hearing aid to hear the voice. Furthermore, in order to solve such a problem, it is conceivable to block the external sound, but if a spoken voice and the like around the user necessary for the user are blocked, the user may be in trouble.

Therefore, the present disclosure proposes an acoustic processing device, an information transmission device, and an acoustic processing system capable of clearly hearing a distributed voice, a spoken voice included in an environmental sound around the user, and the like.

### Solution to Problem

According to the present disclosure, there is provided an acoustic processing device that is worn on a body of a user. The acoustic processing device includes: a sound collection unit that acquires an environmental sound around the user; a reception unit that receives feature information for a specific voice included in a voice output from an acoustic output device to the user; a processing unit that performs acoustic processing on the environmental sound around the user collected by the sound collection unit based on the feature information; and an output unit that outputs the environmental sound processed by the processing unit to the user.

Furthermore, according to the present disclosure, there is provided an information transmission device including a transmission unit that transmits, to an acoustic processing device worn on a body of a user, feature information for a specific voice included in a voice output from an acoustic output device to the user. In the information transmission device, the feature information is used to perform acoustic processing on an environmental sound around the user collected by the acoustic processing device.

Furthermore, according to the present disclosure, there is provided an acoustic processing system including: an acoustic output device that outputs a voice to a user; an acoustic processing device that is worn on a body of the user; and an information transmission device that transmits feature information for a specific voice included in the voice to the acoustic processing device. In the acoustic processing system, the acoustic processing device includes: a sound collection unit that acquires an environmental sound around the user; a reception unit that receives the feature information for the specific voice included in the voice output from the acoustic output device to the user; a processing unit that performs acoustic processing on the environmental sound around the user collected by the sound collection unit based on the feature information; and an output unit that outputs the environmental sound processed by the processing unit to the user.

### Brief Description of Drawings

FIG. 1 is a diagram illustrating a schematic configuration of a hearing aid system 1 according to an embodiment of the present disclosure.
FIG. 2 is a block diagram illustrating functional blocks of a hearing aid 2 and a charger 3 according to the embodiment of the present disclosure.
FIG. 3 is a block diagram illustrating functional blocks of an information processing terminal 40 according to the embodiment of the present disclosure.
FIG. 4 is an explanatory diagram (part 1) illustrating an outline of the embodiment of the present disclosure.
FIG. 5 is an explanatory diagram (part 2) illustrating the outline of the embodiment of the present disclosure.
FIG. 6 is a diagram illustrating a schematic configuration of an acoustic processing system 5a according to a comparative example.
FIG. 7 is a diagram illustrating a schematic configuration of an acoustic processing system 5 according to a first embodiment of the present disclosure.
FIG. 8 is a diagram illustrating an example of data stored in a storage unit 260 in FIG. 7.
FIG. 9 is a diagram illustrating a schematic configuration of an acoustic processing system 5b according to a modification of the first embodiment of the present disclosure.
FIG. 10 is a flowchart illustrating a flow of a processing method according to the first embodiment of the present disclosure.
FIG. 11 is a block diagram illustrating functional blocks of an acoustic output device 200c according to a second embodiment of the present disclosure.
FIG. 12 is an explanatory diagram (part 1) illustrating a processing method according to the second embodiment of the present disclosure.
FIG. 13 is a block diagram illustrating functional blocks of an acoustic output device 200d according to the second embodiment of the present disclosure.
FIG. 14 is an explanatory diagram (part 2) illustrating the processing method according to the second embodiment of the present disclosure.
FIG. 15 is a diagram illustrating an example of data stored in a storage unit 260 in FIG. 13.
FIG. 16 is a block diagram illustrating functional blocks of an acoustic output device 200e according to the second embodiment of the present disclosure.
FIG. 17 is a flowchart illustrating a flow of a processing method according to a third embodiment of the present disclosure.
FIG. 18 is a diagram illustrating a schematic configuration of a hearing aid system 1a according to a modification of the embodiment of the present disclosure.
FIG. 19 is a block diagram illustrating functional blocks of a server 90 according to a modification of the embodiment of the present disclosure.
FIG. 20 is a diagram illustrating an example of utilization of data.
FIG. 21 is a diagram illustrating an example of data.
FIG. 22 is a diagram illustrating an example of cooperation with another device.
FIG. 23 is a diagram illustrating an example of application transition.

### Description of Embodiments

Hereinafter, preferred embodiments of the present disclosure will be described in detail with reference to the accompanying drawings. Note that, in the present specification and the drawings, redundant description of components having substantially the same functional configuration is omitted by assigning the same reference numerals. Further, in the present specification and the drawings, a plurality of components having substantially the same or similar functional configuration may be distinguished from each other by adding different alphabets after the same reference numeral. However, when it is unnecessary to particularly distinguish each of the plurality of components having substantially the same or similar functional configuration, only the same reference numeral is assigned.

Further, the drawings referred to in the following description are drawings for facilitating the description and understanding of an embodiment of the present disclosure. For easy understanding, shapes, dimensions, ratios, and the like illustrated in the drawings may be different from those in an actual case. Furthermore, devices illustrated in the drawings can be appropriately changed in design in consideration of the following description and known technologies.

Note that the description will be given in the following order.
1. Outline of hearing aid system
2. Background
3. First embodiment
   3.1 Acoustic processing system
   3.2 Modification
   3.3 Processing method
4. Second embodiment
5. Third embodiment
6. Summary
7. Modification of hearing aid system
8. Example of data utilization
9. Example of cooperation with another device
10. Example of application transition
11. Supplement

### <<1. Outline of hearing aid system>>

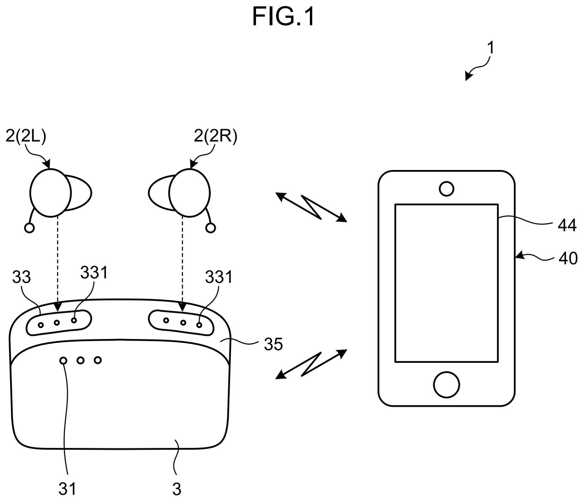

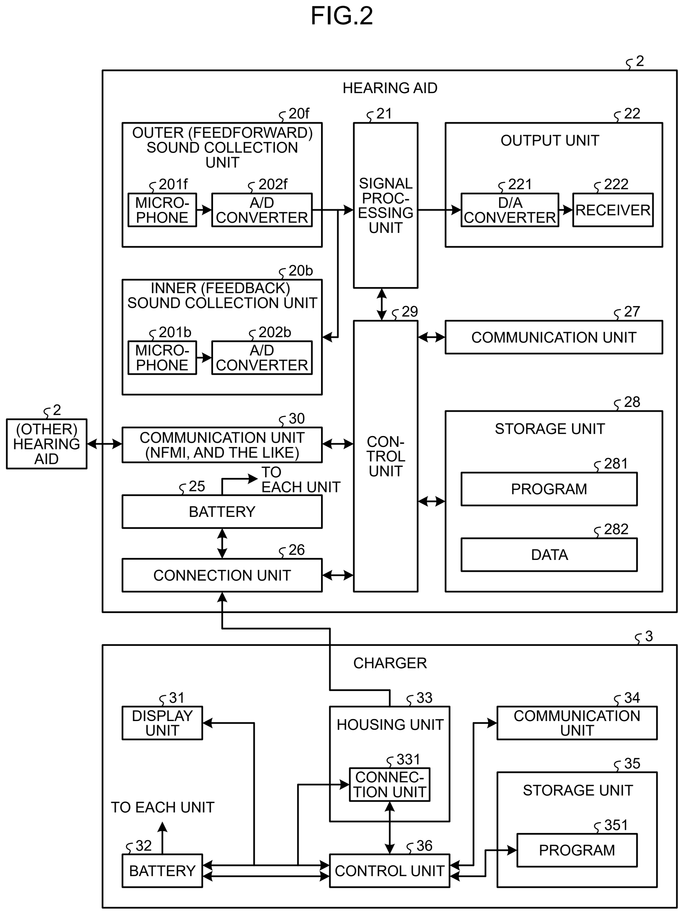

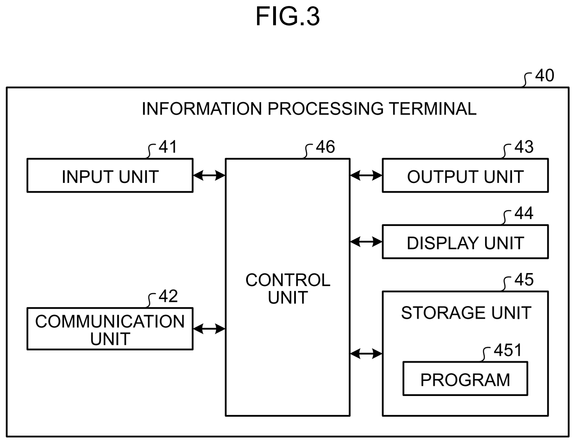

First, an outline of a hearing aid system 1 according to an embodiment of the present disclosure will be described with reference to FIGS. 1 to 3. FIG. 1 is a diagram illustrating a schematic configuration of the hearing aid system 1 according to the embodiment of the present disclosure, and FIG. 2 is a block diagram illustrating functional blocks of a hearing aid 2 and a charger 3 according to the embodiment of the present disclosure. In addition, FIG. 3 is a block diagram illustrating functional blocks of an information processing terminal 40 according to the embodiment of the present disclosure.

As illustrated in FIG. 1, the hearing aid system 1 according to the embodiment of the present disclosure includes a pair of left and right hearing aids 2, a charger 3 (charging case) that houses the hearing aids 2 and charges the hearing aids 2, and an information processing terminal 40 such as a smartphone capable of communicating with at least one of the hearing aid 2 and the charger 3. Hereinafter, each device included in the hearing aid system 1 according to the embodiment of the present disclosure will be sequentially described. In the following description, it is assumed that the hearing aids 2 include a pair of hearing aids for both ears, but the embodiment of the present disclosure is not limited thereto, and a single-ear type may be used in which the hearing aid 2 is worn on one of the left and right ears.

First, a functional configuration of the hearing aid 2 will be described. In the embodiment of the present disclosure, at least a part of the hearing aid 2 can be configured to be worn, for example, on a part of an external auditory canal of a user. As illustrated in FIG. 2, the hearing aid 2 mainly includes a sound collection unit 20 (20b and 20f), a signal processing unit 21, an output unit 22, a battery 25, a connection unit 26, communication units 27 and 30, a storage unit 28, and a control unit 29.

The sound collection unit 20 includes an outer (feedforward) sound collection unit 20f that collects a sound in an outer region of the external auditory canal and an inner (feedback) sound collection unit 20b that collects a sound in an inner region of the external auditory canal. Note that the hearing aid 2 according to the embodiment of the present disclosure only needs to be provided with the outer sound collection unit 20f that collects at least the sound in the outer region of the external auditory canal. Each sound collection unit 20 includes a microphone 201 and an analog/digital (A/D) converter 202. The microphone 201 collects a sound, generates an analog voice signal (acoustic signal), and outputs the analog voice signal to the A/D converter 202. The A/D converter 202 performs digital conversion processing on the analog voice signal input from the microphone 201, and outputs the digitized voice signal to the signal processing unit 21.

Under the control of the control unit 29 described later, the signal processing unit 21 performs predetermined signal processing on a digital voice signal input from the sound collection unit 20, and outputs the digital voice signal to the output unit 22. Here, examples of the predetermined signal processing include filtering processing of separating a voice signal for each predetermined frequency band, amplification processing of amplifying the voice signal with a predetermined amplification amount for each predetermined frequency band for which the filtering processing has been performed, noise reduction processing, and howling cancellation processing. The signal processing unit 21 can include, for example, a memory and a processor having hardware such as a digital signal processor (DSP).

The output unit 22 includes a digital/analog (D/A) converter 221 and a receiver 222. The D/A converter 221 performs analog conversion processing on the digital voice signal input from the signal processing unit 21 and outputs an analog voice signal to the receiver 222. The receiver 222 outputs an output sound (voice) corresponding to the analog voice signal input from the D/A converter 221. The receiver 222 can be configured using, for example, a speaker or the like.

The battery 25 supplies power to each unit forming the hearing aid 2. The battery 25 can include, for example, a rechargeable secondary battery such as a lithium ion battery. Furthermore, the battery 25 can be charged by power supplied from the charger 3 via the connection unit 26.

For example, when the hearing aid 2 is housed in the charger 3, the connection unit 26 is connected to a connection unit of the charger 3, and can receive power and various types of information from the charger 3 and output various types of information to the charger 3. The connection unit 26 can be configured using, for example, one or a plurality of pins.

The communication unit 27 can communicate with the charger 3 or the information processing terminal 40 according to a predetermined communication standard via a communication network under the control of the control unit 29. Here, as the predetermined communication standard, for example, Wi-Fi (registered trademark), Bluetooth (registered trademark), and the like are assumed. The communication unit 27 can be configured using, for example, a communication module or the like. Furthermore, under the control of the control unit 29, the communication unit 30 can communicate with the other hearing aid 2 by short-range communication such as near field magnetic induction (NFMI).

The storage unit 28 stores various types of information regarding the hearing aid 2. The storage unit 28 can be configured using, for example, a random access memory (RAM), a read only memory (ROM), a memory card, and the like. The storage unit 28 can store a program 281 executed by the hearing aid 2 and various data 282 used in the hearing aid 2. Examples of the data 282 can include the age of the user, the presence or absence of use experience of the hearing aid 2 of the user, and the gender of the user. Furthermore, examples of the data can include a use time of the hearing aid 2 of the user clocked by a clocking unit (not illustrated). In addition, the clocking unit is provided inside the hearing aid 2, and can measure the date and time and output a measurement result to the control unit 29 and the like. The clocking unit can be configured using, for example, a timing generator, a timer having a clocking function, or the like.

The control unit 29 controls each unit forming the hearing aid 2. The control unit 29 can be configured using, for example, a memory and a processor having hardware such as a central processing unit (CPU) or a digital signal processor (DSP). The control unit 29 reads the stored program 281 in a work area of the memory and executes the program, thereby controlling each component and the like through execution of the program by the processor.

Although not illustrated in FIG. 2, the hearing aid 2 may have an operation unit. The operation unit can receive an activation signal (trigger signal) for activating the hearing aid 2 and output the received activation signal to the control unit 29. The operation unit can be configured using, for example, a push switch, a button, a touch panel, or the like.

Further, the hearing aid 2 may be equipped with a biological information sensor (not illustrated) which is a non-invasive sensor device capable of acquiring various types of biological information (sensing data) of the user. Examples of the biological information sensor can include a blood flow sensor that detects pulse, heart rate, blood flow, blood oxygen, and the like of the user.

Furthermore, the hearing aid 2 may be equipped with an inertial measurement unit (IMU) (not illustrated) capable of acquiring information regarding the posture and the operation of the user. Specifically, the IMU includes an acceleration sensor that is an inertial sensor that acquires acceleration, a gyro sensor (angular velocity sensor) that is an inertial sensor that acquires an angular velocity, and the like.

Furthermore, the hearing aid 2 may include a positioning sensor (not illustrated) capable of acquiring information regarding the position of the user. The positioning sensor is a sensor that detects the position of the target user wearing the hearing aid 2, and can be specifically a global navigation satellite system (GNSS) receiver or the like. In this case, the positioning sensor can generate sensing data indicating the latitude and longitude of the current location of the target user based on a signal from a GNSS satellite. For example, since it is possible to detect a relative positional relation of the user from information of radio frequency identification (RFID), a Wi-Fi access point, and a wireless base station and the like, the hearing aid 2 may be equipped with such a communication device as the positioning sensor.

Next, a functional configuration of the charger 3 will be described. As illustrated in FIG. 2, the charger 3 mainly includes a display unit 31, a battery 32, a housing unit 33, a communication unit 34, a storage unit 35, and a control unit 36.

The display unit 31 displays various states related to the hearing aid 2 under the control of the control unit 36. For example, the display unit 31 can display information indicating that the hearing aid 2 is being charged and information indicating that various types of information are being received from the information processing terminal 40. The display unit 31 can be configured using, for example, a light emitting diode (LED) or the like.

The battery 32 supplies power to each unit forming the hearing aid 2 housed in the housing unit 33 and the charger 3 via a connection unit 331 provided in the housing unit 33. The battery 32 can be configured using, for example, a secondary battery such as a lithium ion battery.

In a case where the hearing aids 2 have two left and right channels, the housing unit 33 individually houses each hearing aid 2. Note that the hearing aid 2 may be of a single-ear type. Further, the housing unit 33 is provided with the connection unit 331 that can be connected to the connection unit 26 of the hearing aid 2. When the hearing aid 2 is housed in the housing unit 33, the connection unit 331 is connected to the connection unit 26 of the hearing aid 2, transmits power from the battery 32 and various types of information from the control unit 36, receives various types of information from the hearing aid 2, and outputs the information to the control unit 36. The connection unit 331 can be configured using, for example, one or a plurality of pins.

The communication unit 34 communicates with the information processing terminal 40 according to a predetermined communication standard via a communication network under the control of the control unit 36. The communication unit 34 can be configured using, for example, a communication module.

The storage unit 35 stores various programs 351 executed by the charger 3. The storage unit 35 can be configured using, for example, a RAM, a ROM, a flash memory, a memory card, and the like.

The control unit 36 controls each unit forming the charger 3. For example, when the hearing aid 2 is housed in the housing unit 33, the control unit 36 supplies power from the battery 32 via the connection unit 331. The control unit 36 can be configured using, for example, a memory and a processor having hardware such as a CPU or a DSP. The control unit 36 reads the program 351 in a work area of the memory and executes the program, thereby controlling each component and the like through execution of the program by the processor.

Next, a functional configuration of the information processing terminal 40 will be described. As illustrated in FIG. 3, the information processing terminal 40 mainly includes an input unit 41, a communication unit 42, an output unit 43, a display unit 44, a storage unit 45, and a control unit 46.

The input unit 41 receives inputs of various operations from the user, and outputs signals according to the received operations to the control unit 46. The input unit 41 can be configured using, for example, a switch, a touch panel, and the like.

The communication unit 42 communicates with the charger 3 or the hearing aid 2 via the communication network under the control of the control unit 46. The communication unit 42 can be configured using, for example, a communication module.

The output unit 43 outputs a volume of a predetermined sound pressure level for each predetermined frequency band under the control of the control unit 46. The output unit 43 can be configured using, for example, a speaker or the like.

The display unit 44 displays various types of information regarding the information processing terminal 40 and information regarding the hearing aid 2 under the control of the control unit 46. The display unit 44 can be configured using, for example, a liquid crystal display, an organic electroluminescent (EL) display, or the like.

The storage unit 45 stores various types of information regarding the information processing terminal 40. The storage unit 45 stores various programs 451 and the like executed by the information processing terminal 40. The storage unit 45 can be configured using, for example, a recording medium such as a RAM, a ROM, a flash memory, or a memory card.

The control unit 46 controls each unit forming the information processing terminal 40. The control unit 46 can be configured using, for example, a memory and a processor having hardware such as a CPU. The control unit 46 reads a program stored in the storage unit 45 in a work area of the memory and executes the program, thereby controlling each component and the like through execution of the program by the processor.

Further, the information processing terminal 40 may include a positioning sensor (not illustrated). The positioning sensor is a sensor that detects the position of the user carrying the information processing terminal 40, and can be specifically a GNSS receiver or the like. In this case, the positioning sensor can generate sensing data indicating the latitude and longitude of the current location of the user based on a signal from a GNSS satellite. For example, since it is possible to detect a relative positional relation of the user from information of RFID, a Wi-Fi access point, and a wireless base station and the like, the information processing terminal 40 may mount such a communication device as the positioning sensor.

Further, the information processing terminal 40 may be equipped with an imaging device (not illustrated). Specifically, the imaging device can be configured to include an imaging element (not illustrated) such as a complementary MOS (CMOS) image sensor, and a signal processing circuit (not illustrated) that performs imaging signal processing on a signal photoelectrically converted by the imaging element. The imaging device can further include an optical system mechanism (not illustrated) including an imaging lens, a diaphragm mechanism, a zoom lens, a focus lens, and the like, and a drive system mechanism (not illustrated) that controls the operation of the optical system mechanism.

In the embodiment of the present disclosure, the functional configurations of the hearing aid system 1 and each device included in the hearing aid system are not limited to the forms illustrated in FIGS. 1 to 3. For example, as described later, the hearing aid system 1 may include a server or the like.

Note that, in the description of the embodiment of the present disclosure described below, a case where the present disclosure is applied to the hearing aid system 1 will be described as an example, but the embodiment of the present disclosure is not limited to the application to the hearing aid system 1, and can also be applied to a system including another auditory device (for example, an earphone, a headphone, or the like).

### <<2. Background>>

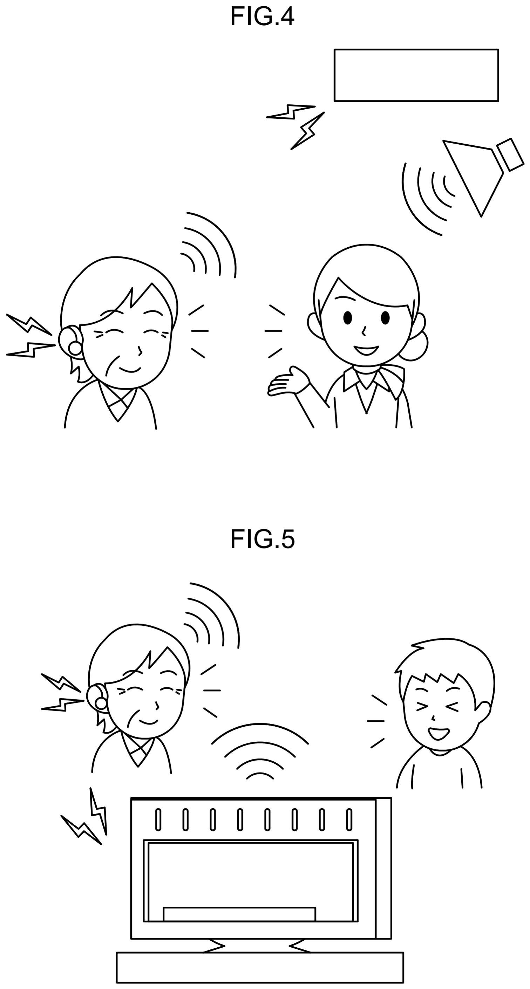

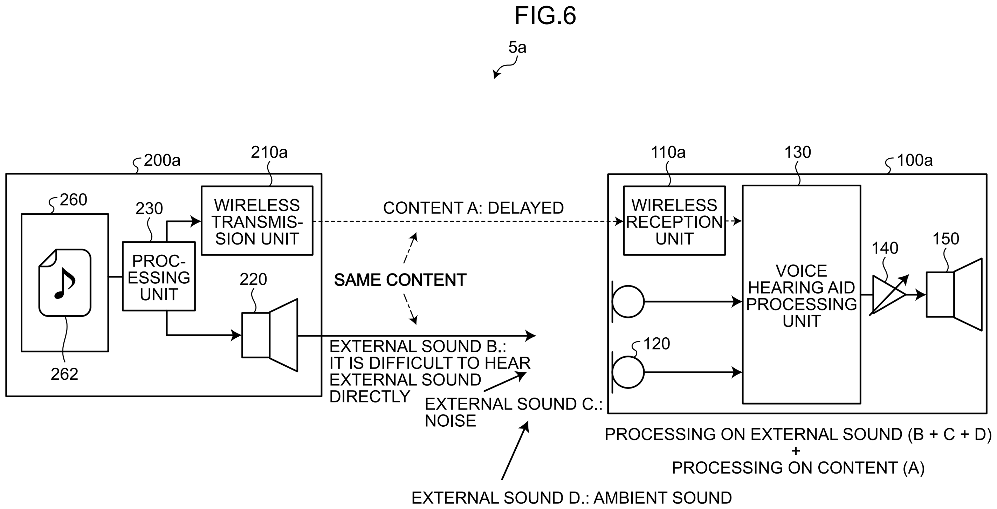

Next, the background leading to the creation of the embodiment of the present disclosure by the inventor will be described with reference to FIGS. 4 to 6. FIGS. 4 and 5 are explanatory diagrams illustrating an outline of the embodiment of the present disclosure, and specifically, FIGS. 4 and 5 are diagrams illustrating a situation in which a user wearing the hearing aid 2 uses the hearing aid 2. Further, FIG. 6 is a diagram illustrating a schematic configuration of an acoustic processing system 5a according to a comparative example. Here, it is assumed that the comparative example means the acoustic processing system 5a that has been examined by the present inventor before the embodiment of the present disclosure is made.

It is difficult for the user wearing the hearing aid 2 to hear a voice in a reverberation environment. For example, as illustrated in FIG. 4, there is a scene where a guide broadcast flown from a speaker installed in an airport is heard through the hearing aid 2. Specifically, in FIG. 4, the user uses the hearing aid 2 to hear a voice of a person around the user such as an airport staff or the like, and a broadcast notifying about the departure and arrival of a flight. In such a case, since the hearing aid 2 is used, different sounds and reverberations are included in the broadcast that the user hears, and it is difficult for the user to hear the voice. In addition, as illustrated in FIG. 5, there is a scene where an output voice from a television device is heard through the hearing aid 2 in a living room or the like. Specifically, in FIG. 5, a user who uses the hearing aid 2 and a person who does not use the hearing aid 2 simultaneously view the same content from the same television device. In this case, since the person who does not use the hearing aid 2 also views the content, the output of the television device is not adjusted according to auditory characteristics of the user who uses the hearing aid 2. Therefore, since the user who uses the hearing aid 2 uses the hearing aid 2, the voice from the television device that the user hears includes different sounds and reverberations, and it is difficult for the user to hear the voice.

Therefore, it is conceivable to perform signal processing for removing reverberations in the hearing aid 2, but it is generally difficult to perform such signal processing with high accuracy. For this reason, in recent years, it has been examined to directly stream (distribute) the voice included in the guide broadcast in the airport or the video content output by the television device to the hearing aid 2 to directly deliver the voice to the user wearing the hearing aid 2. Specifically, in the example of FIG. 4, the user uses the hearing aid 2 to hear a voice of a person around the user such as an airport staff or the like, a guidance streamed from a transmission device, and a broadcast notifying about the departure and arrival of a flight. In addition, in the example of FIG. 5, the user uses the hearing aid 2 to hear a voice of an adjacent person, a voice of the content streamed from a television device, and a voice output from the television device.

FIG. 6 illustrates an example of a schematic configuration of an acoustic processing system 5a according to a comparative example assuming direct streaming to the hearing aid 2. As illustrated in FIG. 6, the acoustic processing system 5a according to the comparative example includes an acoustic output device 200a and a hearing aid (acoustic processing device) 100a, which are communicably connected to each other via a wireless communication network (not illustrated). Hereinafter, an outline of each device included in the acoustic processing system 5a according to the comparative example will be described.

The acoustic output device 200a is a device that outputs a voice or the like to the user, and can be, for example, an in-house speaker, a television device, or the like. Specifically, as illustrated in FIG. 6, the acoustic output device 200a mainly includes a wireless transmission unit 210a, an output unit 220, a processing unit 230, and a storage unit 260. Hereinafter, each functional unit of the acoustic output device 200a will be described.

The wireless transmission unit 210a transmits a data signal to an external device such as the hearing aid 2. The output unit 220 is a device for outputting a voice to the user, and is realized by, for example, a speaker or the like. The processing unit 230 converts a content 262 into a communicable data format and outputs the content to the wireless transmission unit 210a described above. In addition, the processing unit 230 performs signal conversion such that the output unit 220 can output the content 262 by a voice, and outputs the content to the output unit 220. The storage unit 260 stores programs, data, and the like for the processing unit 230 described above to execute various types of processing, data obtained by the processing, the content 262, and the like.

The hearing aid 100a is, for example, a device that is worn on an outer ear of the user and outputs a voice or the like to the user. Specifically, as illustrated in FIG. 6, the hearing aid 100a mainly includes a wireless reception unit 110a, a sound collection unit 120, a voice hearing aid processing unit 130, an adjustment unit 140, and an output unit 150. Hereinafter, each functional unit of the hearing aid 100a will be described.

The wireless reception unit 110a receives data from an external device such as the acoustic output device 200a. The sound collection unit 120 can collect an environmental sound around the user, and is realized by, for example, a microphone or the like. The voice hearing aid processing unit 130 performs hearing aid processing on the streamed content 262 and the voice signal input from the sound collection unit 120 and outputs them to the adjustment unit 140. Specifically, the voice hearing aid processing unit 130 performs the hearing aid processing on a voice of the content 262 ("external sound B" in FIG. 6), a noise included in the environmental sound around the user ("external sound C: noise" in FIG. 6), and a spoken voice included in the environmental sound around the user ("external sound D: ambient sound" in FIG. 6), which are input from the sound collection unit 120. Here, examples of the hearing aid processing can include filtering processing of separating a voice signal for each predetermined frequency band, amplification processing of amplifying the voice signal with a predetermined amplification amount for each predetermined frequency band for which the filtering processing has been performed, noise reduction processing, and howling cancellation processing. The voice hearing aid processing unit 130 also performs the hearing aid processing on the voice of the streamed content 262 ("content A" in FIG. 6). Here, examples of the hearing aid processing can include filtering processing of separating a voice signal for each predetermined frequency band and amplification processing of amplifying the voice signal with a predetermined amplification amount for each predetermined frequency band for which the filtering processing has been performed.

The adjustment unit 140 can adjust the voice output from the voice hearing aid processing unit 130 to have a sound pressure or a frequency characteristic according to the user's operation, and is realized by, for example, a compressor, an equalizer, or the like. The output unit 150 is a device for outputting a voice to the user, and is realized by, for example, a speaker or the like. Note that the acoustic processing system 5a according to the comparative example is not limited to the configuration illustrated in FIG. 6.

Here, a case of directly streaming (distributing) the content 262 to the hearing aid 2 using the acoustic processing system 5a according to the comparative example as illustrated in FIG. 6 will be considered. For example, in the scenes illustrated in FIGS. 4 and 5, since it is necessary to deliver the voice to the person who does not use the hearing aid 2, the voice of the content 262 ("content A" in FIG. 6) is output from the output unit 220 of the acoustic output device 200a. In such a case, the voice of the content 262 output from the output unit 220 of the acoustic output device 200a is taken into the hearing aid 2 as an external sound ("external sound B" in FIG. 6) and is output from the hearing aid 100a to the user. Furthermore, the same content ("content A" in FIG. 6) is output from the hearing aid 100a to the user by streaming. Therefore, for the user who uses the hearing aid 2, the voice of the content 262 ("content A" in FIG. 6) and the voice taken into the hearing aid 2 as the external sound ("external sound B" in FIG. 6) overlap each other as different sounds at different times because the voices are temporally deviated (delayed) due to streaming. Since the different sounds overlap due to the delay, it is difficult for the user to hear both the voice of the content 262 ("content A" in FIG. 6) and the spoken voice ("external sound D: ambient sound" in FIG. 6) included in the environmental sound around the user even though the user uses the hearing aid 2. Specifically, as in the example of FIG. 4, in the scene where the user uses the hearing aid 2 to hear the voice of the person around the user such as the airport staff or the like, the guidance streamed from the transmission device, or the broadcast notifying about the departure and arrival of the flight, it is difficult for the user to hear each voice. In addition, as in the example of FIG. 5, even in the scene where the user uses the hearing aid 2 to hear the voice of the adjacent person, the voice of the content streamed from the television device, or the voice output from the television device, it is difficult for the user to hear each voice.

Therefore, in view of such a situation, the present inventor has considered that a device capable of clearly hearing both the voice of the content 262 ("content A" in FIG. 6) by streaming and the spoken voice ("external sound D: ambient sound" in FIG. 6) included in the environmental sound around the user is necessary even in a case where the user who uses the hearing aid 2 uses streaming, and has performed intensive examination.

During such examination, the present inventor has focused on using feature vector data indicating features of the spoken voice of the speaker in the content 262 ("content A" in FIG. 6) to be streamed. A human voice has features peculiar to the human voice, and it is considered that spoken voices of the same person have the same features even if contents of utterances are different.

Therefore, under such an assumption, it is possible to extract a feature amount of a spoken voice of each person by using machine learning, and it is possible to extract or suppress (remove) a spoken voice of a specific person from various sounds by using the feature amount.

For example, by using a long short-term memory (LSTM) encoder, a feature amount (feature vector data) of a specific speaker can be extracted from a frequency spectrogram obtained by performing frequency analysis on a voice signal of a voice of the speaker. Furthermore, for example, by using a convolutional neural network (CNN), it is possible to perform processing of further emphasizing features included in a frequency spectrogram obtained from a voice signal of a voice newly obtained. Then, by inputting the data processed by the CNN and the feature vector data of the speaker to the LSTM, the voice of the speaker can be extracted from the data processed by the CNN.

Therefore, the present inventor has created the embodiment of the present disclosure in which both the voice of the content 262 and the spoken voice ("external sound D: ambient sound" in FIG. 6) included in the environmental sound around the user can be clearly heard by selectively performing acoustic processing on the specific sound using such feature vector data.

Specifically, according to the present embodiment, as in the example of FIG. 4, even in the scene where the user uses the hearing aid 2 to hear the voice of the person around the user such as the airport staff or the like, the guidance streamed from the transmission device, or the broadcast notifying about the departure and arrival of the flight, the user can clearly hear each voice. Further, according to the present embodiment, as in the example of FIG. 5, even in the scene where the user uses the hearing aid 2 to hear the voice of the adjacent person, the voice of the content streamed from the television device, or the voice output from the television device, the user can clearly hear each voice. Hereinafter, details of the embodiments of the present disclosure created by the present inventor will be sequentially described.

### <<3. First embodiment>>

### <3.1 Acoustic processing system>

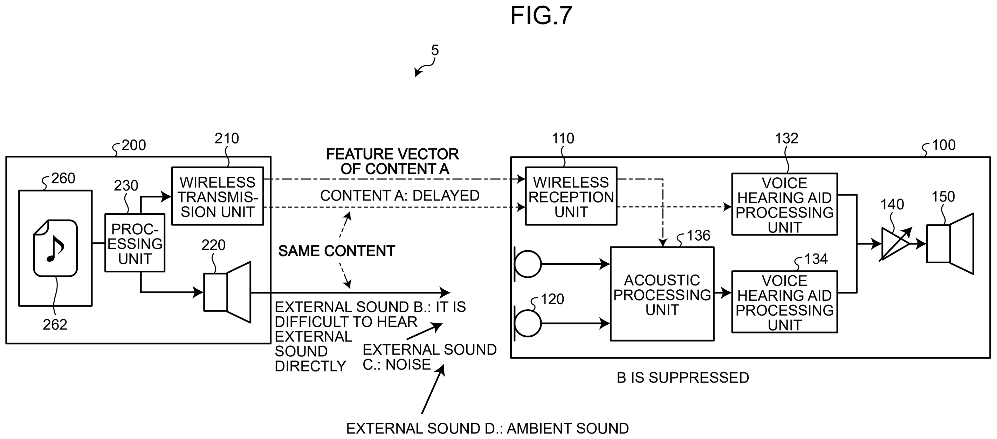

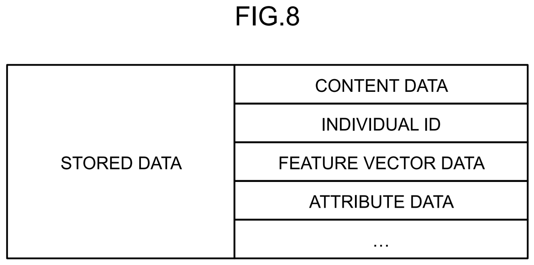

First, an acoustic processing system 5 according to a first embodiment of the present disclosure will be described with reference to FIGS. 7 and 8. FIG. 7 is a diagram illustrating a schematic configuration of the acoustic processing system 5 according to the present embodiment, and FIG. 8 is a diagram illustrating an example of data stored in a storage unit 260 of FIG. 7.

As illustrated in FIG. 7, the acoustic processing system 5 according to the present embodiment includes an acoustic output device 200 and a hearing aid (acoustic processing device) 100, which are communicably connected to each other via a wireless communication network (not illustrated). Specifically, the acoustic output device 200 and the hearing aid 100 are connected to a wireless communication network via a base station or the like (for example, a base station of a mobile phone, an access point of a wireless local area network (LAN), and the like) which is not illustrated. Note that, as a wireless communication method used in the wireless communication network, for example, an arbitrary method such as WiFi (registered trademark) or Bluetooth (registered trademark) can be applied, but it is desirable to use a communication method capable of maintaining a stable operation. Hereinafter, an outline of each device included in the acoustic processing system 5 according to the present embodiment will be described.

### (Acoustic output device 200)

The acoustic output device 200 is a device that outputs a voice (content 262) or the like to the user, and can be, for example, an in-house speaker, a television device, or the like, and may be a smartphone, a tablet terminal, or the like. Specifically, as illustrated in FIG. 7, the acoustic output device 200 mainly includes a wireless transmission unit (transmission unit) 210, an output unit 220, a processing unit 230, and a storage unit 260. Hereinafter, each functional unit of the acoustic output device 200 will be described.

The wireless transmission unit 210 can transmit data to an external device such as the hearing aid 2. In other words, the wireless transmission unit 210 can be said to be a communication interface having a function of transmitting and receiving data. For example, the wireless transmission unit 210 can distribute (stream) data of the content 262 to the hearing aid 2. Further, in the present embodiment, the wireless transmission unit 210 can transmit feature vector data corresponding to the content 262. Further, the wireless transmission unit 210 is realized by a communication device such as a communication antenna, a transmission/reception circuit, or a port.

The output unit 220 is a device for outputting a voice or the like of the content 262 to the user, and is realized by, for example, a speaker or the like.

The processing unit 230 converts the content 262 and the feature vector data corresponding to the content 262 into a communicable data format and outputs them to the wireless transmission unit 210 described above. In addition, the processing unit 230 performs signal conversion such that the output unit 220 can output the content 262 by a voice, and outputs the content to the output unit 220. The processing unit 230 can be configured using, for example, various memories and a processor having hardware such as a central processing unit (CPU) or a digital signal processor (DSP).

The storage unit 260 stores programs, data, and the like for the processing unit 230 described above to execute various types of processing, data obtained by the processing, the content 262, the feature vector data, and the like. For example, as illustrated in FIG. 8, in addition to the data of the content 262 to be output, the storage unit 260 stores feature vector data corresponding to the content 262, individual identification data (ID) for identifying a speaker associated with the feature vector data, and attribute data (age, gender, language used, and the like) of the speaker. Note that the storage unit 260 is realized by, for example, a magnetic recording medium such as a hard disk (HD). Further, the present embodiment is not limited to using the feature vector data, and the data content, the data format, and the like are not particularly limited as long as feature information indicating features of the voice of the content 262, such as feature information indicating features of a specific voice included in the voice of the content 262, is used.

### (Hearing aid 100)

The hearing aid 100 is a device that is worn on an outer ear of a user and outputs a voice or the like to the user. Specifically, as illustrated in FIG. 7, the hearing aid 100 mainly includes a wireless reception unit (reception unit) 110, a sound collection unit 120, voice hearing aid processing units (processing units) 132 and 134, an acoustic processing unit (processing unit) 136, an adjustment unit 140, and an output unit 150. Hereinafter, each functional unit of the hearing aid 100 will be described.

The wireless reception unit 110 can receive data from an external device such as the acoustic output device 200. In other words, the wireless reception unit 110 can be said to be a communication interface having a function of transmitting and receiving data. For example, the wireless reception unit 110 can receive the content 262 and the feature vector data from the acoustic output device 200, output the content 262 ("content A" in FIG. 7) to the voice hearing aid processing unit 132 to be described later, and output the feature vector data to the acoustic processing unit 136 to be described later. Note that the wireless reception unit 110 is realized by a communication device such as a communication antenna, a transmission/reception circuit, or a port.

The sound collection unit 120 can collect an environmental sound around the user, that is, the voice of the content 262 ("external sound B" in FIG. 7), a noise included in the environmental sound around the user ("external sound C: noise" in FIG. 7), and a spoken voice included in the environmental sound around the user ("external sound D: ambient sound" in FIG. 7), and output them to the acoustic processing unit 136 described later. The sound collection unit 120 is realized by, for example, a microphone or the like. Furthermore, the sound collection unit 120 may include a microphone that collects a sound in an inner region of an external auditory canal of the user.

The voice hearing aid processing unit 132 performs hearing aid processing on the voice (specific voice) of the streamed content 262 ("content A" in FIG. 7) and outputs the voice to the adjustment unit 140. Further, the voice hearing aid processing unit 134 performs the hearing aid processing on the voice signal from the sound collection unit 120, specifically, the spoken voice included in the environmental sound around the user ("external sound D: ambient sound" in FIG. 7), and outputs it to the adjustment unit 140. Here, examples of the hearing aid processing can include filtering processing of separating a voice signal for each predetermined frequency band, amplification processing of amplifying the voice signal with a predetermined amplification amount for each predetermined frequency band for which the filtering processing has been performed, and howling cancellation processing. The voice hearing aid processing units 132 and 134 are realized by hardware such as a DSP or a memory.

The acoustic processing unit 136 performs predetermined signal processing on the voice signal input from the sound collection unit 120 based on the feature vector data corresponding to the content 262, and outputs the voice signal to the voice hearing aid processing unit 134. Specifically, the acoustic processing unit 136 extracts the voice (specific voice) ("external sound B" in FIG. 7) of the content 262 included in the environmental sound collected by the sound collection unit 120 based on the feature vector data, and performs suppression processing on the voice. Furthermore, the acoustic processing unit 136 performs the suppression processing on the noise ("external sound C: noise" in FIG. 7) included in the environmental sound collected by the sound collection unit 120. The acoustic processing unit 136 can be configured using, for example, various memories and a processor having hardware such as a CPU and a DSP.

The adjustment unit 140 can adjust the voices output from the voice hearing aid processing units 132 and 134 so as to have sound pressures and frequency characteristics according to the user's operation, and the adjusted voices are output by the output unit 150 described later. The adjustment unit 140 is realized by, for example, a compressor, an equalizer, or the like.

Further, the output unit 150 is a device for outputting the voice processed by the adjustment unit 140 to the user, and is realized by, for example, a speaker or the like.

Note that the acoustic processing system 5 according to the present embodiment is not limited to the configuration illustrated in FIG. 7. In the present embodiment, for example, the acoustic output device 200 may be a separate device of a device that outputs a voice (content 262) or the like to the user, a device that distributes data of the content 262, and a device (information transmission device) that transmits feature vector data corresponding to the content 262. Alternatively, in the present embodiment, for example, the acoustic output device 200 may be a separate device of a device having the functions of two devices among the above-described devices and a device having the functions of the remaining devices.

In the present embodiment, the content 262 as streaming data is distributed from the acoustic output device 200 to the hearing aid 100. Therefore, the hearing aid 100 outputs the environmental sound around the user collected by the sound collection unit 120 of the hearing aid 100 to the user together with the voice of the content 262 as the streaming data.

Further, in the present embodiment, together with the content 262 as streaming data, feature vector data that is a feature amount indicating a feature of an utterance of a speaker speaking in the content 262 is transmitted from the acoustic output device 200 to the hearing aid 100. In the present embodiment, the hearing aid 100 does not output the environmental sound around the user collected by the sound collection unit 120 to the user as it is or after performing only the hearing aid processing, but uses the received feature vector data to accurately extract the voice of the content 262 ("external sound B" in FIG. 7) from the environmental sound around the user collected by the sound collection unit 120, and selectively performs the suppression processing. Therefore, in the present embodiment, even if the hearing aid 100 outputs the voice of the streamed content 262 ("content A" in FIG. 7), the voice does not overlap with the voice of the content 262 ("external sound B" in FIG. 7) collected by the sound collection unit 120 which is the voice of the same content 262, so that the user can clearly hear the voice of the streamed content 262 ("content A" in FIG. 6).

Furthermore, in the present embodiment, the hearing aid 100 performs the hearing aid processing on the spoken voice ("external sound D: ambient sound" in FIG. 7) included in the environmental sound around the user collected by the sound collection unit 120, and performs the suppression processing on the noise ("external sound C: noise" in FIG. 7) included in the environmental sound collected by the sound collection unit 120. As a result, in the present embodiment, the user can also clearly hear the spoken voice ("external sound D: ambient sound" in FIG. 7) included in the environmental sound around the user. That is, in the present embodiment, the user can clearly hear the voice of the content 262 by streaming without blocking the necessary sound among the environmental sounds around the user.

### <3.2 Modification>

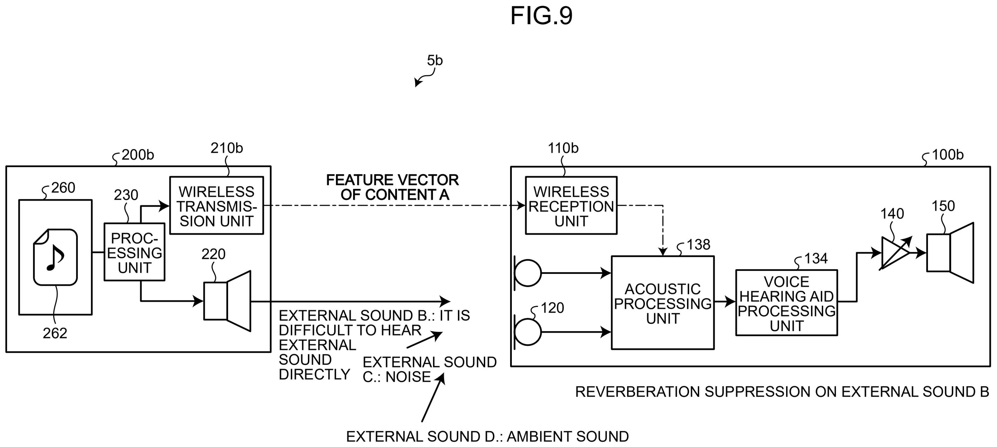

Furthermore, in the present embodiment, the content 262 as streaming data may not be distributed from the acoustic output device 200 to the hearing aid 100, and only the feature vector data corresponding to the content 262 may be transmitted. Hereinafter, an acoustic processing system 5b according to such a modification will be described with reference to FIG. 9. FIG. 9 is a diagram illustrating a schematic configuration of the acoustic processing system 5b according to the present embodiment.

As illustrated in FIG. 9, the acoustic processing system 5b also includes an acoustic output device 200b and a hearing aid (acoustic processing device) 100b, which are communicably connected to each other via a wireless communication network (not illustrated). Hereinafter, an outline of each device included in the acoustic processing system 5b according to the present embodiment will be described.

### (Acoustic output device 200b)

The acoustic output device 200b is a device that outputs a voice (content 262) or the like to the user. Specifically, as illustrated in FIG. 9, the acoustic output device 200b mainly includes a wireless transmission unit 210b, an output unit 220, a processing unit 230, and a storage unit 260. Hereinafter, each functional unit of the acoustic output device 200b will be described. However, since the output unit 220, the processing unit 230, and the storage unit 260 are common to those of the acoustic processing system 5 described with reference to FIG. 7, the description thereof will be omitted here, and only the wireless transmission unit 210b will be described.

The wireless transmission unit 210b can transmit data to an external device such as the hearing aid 2. For example, the wireless transmission unit 210b can transmit feature vector data corresponding to the content 262.

### (Hearing aid 100b)

The hearing aid 100b is a device that is worn on an outer ear of a user and outputs a voice or the like to the user. Specifically, as illustrated in FIG. 9, the hearing aid 100b mainly includes a wireless reception unit (reception unit) 110b, a sound collection unit 120, a voice hearing aid processing unit (processing unit) 134, an acoustic processing unit (processing unit) 138, an adjustment unit 140, and an output unit 150. Hereinafter, each functional unit of the hearing aid 100b will be described. However, since the sound collection unit 120, the voice hearing aid processing unit 134, the adjustment unit 140, and the output unit 150 are common to those of the acoustic processing system 5 described with reference to FIG. 7, the description thereof will be omitted here, and only the wireless reception unit 110b and the acoustic processing unit 138 will be described.

The wireless reception unit 110b can receive data from an external device such as the acoustic output device 200. For example, the wireless reception unit 110b can receive the feature vector data from the acoustic output device 200 and output the feature vector data to the acoustic processing unit 138 described later.

The acoustic processing unit 138 performs predetermined signal processing on the voice signal input from the sound collection unit 120 based on the feature vector data corresponding to the content 262, and outputs the voice signal to the voice hearing aid processing unit 134. Specifically, the acoustic processing unit 138 extracts a voice (specific voice) ("external sound B" in FIG. 9) of the content 262 included in the environmental sound collected by the sound collection unit 120 based on the feature vector data, and performs reverberation suppression processing (howling cancellation processing) on the voice. Further, the acoustic processing unit 138 performs suppression processing on a noise ("external sound C: noise" in FIG. 8) included in the environmental sound collected by the sound collection unit 120. Note that, after the above processing, the voice hearing aid processing unit 134 performs hearing aid processing on a spoken voice ("external sound D: ambient sound" in FIG. 9) and a voice of the content 262 ("external sound B" in FIG. 9) included in the environmental sound around the user. The acoustic processing unit 138 can be configured using, for example, various memories and a processor having hardware such as a CPU or a DSP.

Note that the acoustic processing system 5b according to the present modification is not limited to the configuration illustrated in FIG. 9.

In the present modification, the hearing aid 100b outputs the environmental sound around the user collected by the sound collection unit 120 of the hearing aid 100, including the voice of the content 262 ("external sound B" in FIG. 9), to the user. In the present modification, feature vector data that is a feature amount indicating a feature of an utterance of a speaker speaking in the content 262 is also transmitted from the acoustic output device 200b to the hearing aid 100b. In the present modification, the hearing aid 100b does not output the environmental sound around the user collected by the sound collection unit 120 to the user as it is or after performing only the hearing aid processing, but uses the received feature vector data to accurately extract the voice of the content 262 ("external sound B" in FIG. 9) from the environmental sound around the user collected by the sound collection unit 120, and selectively performs reverberation suppression processing. Therefore, in the present modification, the user can clearly hear the voice of the content 262 ("external sound B" in FIG. 9) collected by the sound collection unit 120 via the hearing aid 100b.

Moreover, in the present modification, the hearing aid 100b performs hearing aid processing on a spoken voice ("external sound D: ambient sound" in FIG. 9) included in the environmental sound around the user collected by the sound collection unit 120, and performs suppression processing on a noise ("external sound C: noise" in FIG. 9) included in the environmental sound collected by the sound collection unit 120. As a result, in the present modification, the user can also clearly hear the spoken voice ("external sound D: ambient sound" in FIG. 9) included in the environmental sound around the user. That is, in the present modification, the user can clearly hear the voice of the content 262 without blocking the necessary sound among the environmental sounds around the user.

### <3.3 Processing method>

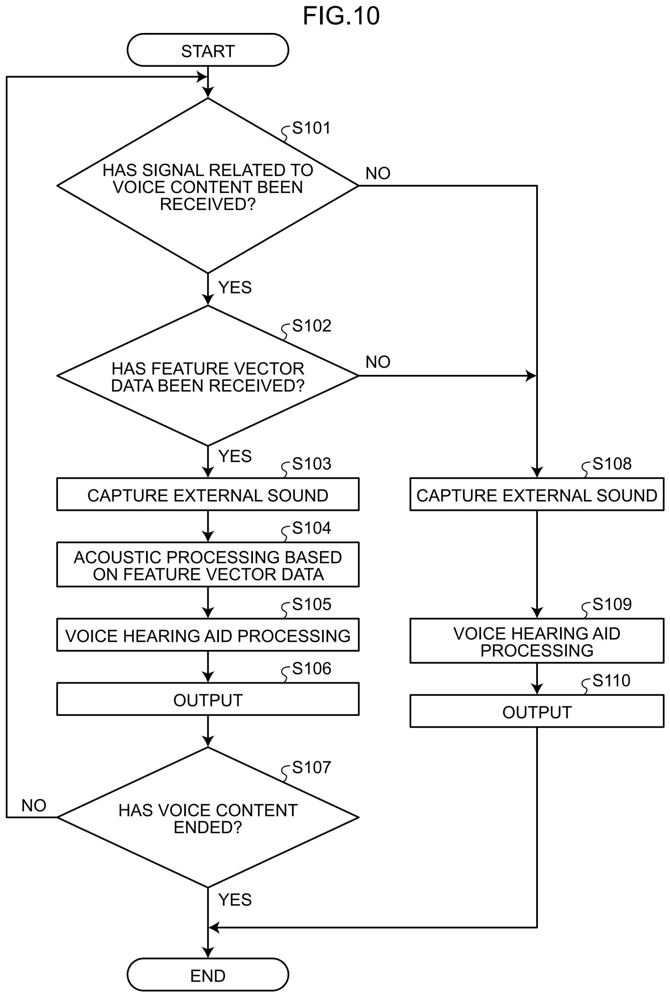

Next, a processing method performed in the hearing aids 100 and 100b (hereinafter, referred to as the hearing aid 100) according to the present embodiment and the modification will be described with reference to FIG. 10. FIG. 10 is a flowchart illustrating a flow of a processing method according to the present embodiment. As illustrated in FIG. 10, the processing method according to the present embodiment includes a plurality of steps including steps S101 to S110. Hereinafter, details of each step included in the processing method according to the present embodiment will be described.

The hearing aid 100 determines whether or not a signal related to the content 262 (voice content) has been received (step S101). When it is determined that the signal related to the content 262 has been received (step S101: Yes), the hearing aid 100 proceeds to step S102, and when it is determined that the signal related to the content 262 has not been received (step S101: No), the hearing aid 100 proceeds to step S108.

The hearing aid 100 determines whether or not the feature vector data has been received (step S102). When it is determined that the feature vector data has been received (step S102: Yes), the hearing aid 100 proceeds to step S103, and when it is determined that the feature vector data has not been received (step S102: No), the hearing aid 100 proceeds to step S108.

The hearing aid 100 captures an external sound (environmental sound) around the user (step S103). Next, the hearing aid 100 performs acoustic processing based on the received feature vector data (step S104). Then, the hearing aid 100 performs hearing aid processing (step S105). Moreover, the hearing aid 100 outputs the processed voice to the user (step S106).

The hearing aid 100 determines whether or not the content 262 (voice content) has ended (step S107). When it is determined that the content has ended (step S107: Yes), the hearing aid 100 ends the processing, and when it is determined that the content has not ended (step S107: No), the hearing aid 100 returns the processing to step S101.

The hearing aid 100 captures an external sound (environmental sound) around the user (step S108). Next, the hearing aid 100 performs hearing aid processing (step S109). Further, the hearing aid 100 outputs the processed voice to the user (step S110), and ends the processing.

Note that the processing method according to the present embodiment is not limited to the flow illustrated in FIG. 10. For example, each step described above may not necessarily be processed in the described order, and each step may be processed in appropriately changed order, or may be processed partially in parallel or individually instead of being processed in time series.

In the present embodiment, since the high-accuracy acoustic processing based on the feature vector data requires a large calculation resource, the processing is not limited to the processing of the hearing aid 100 alone. In the present embodiment, for example, in the information processing terminal 40 capable of controlling the hearing aid 100, some or all of the acoustic processing based on the feature vector data may be performed to control the hearing aid 100. Alternatively, in the present embodiment, a server (not illustrated) on a cloud and the information processing terminal 40 may cooperate to perform some or all of the acoustic processing based on the feature vector data and control the hearing aid 100.

Further, in the present embodiment, the position of the user may be recognized by a positioning sensor (not illustrated) or the like mounted on the hearing aid 100 or the information processing terminal 40, and the content 262 or the like to be reproduced may be determined according to the distance between the acoustic output device 200 and the hearing aid 100. For example, in a case where there are a plurality of acoustic output devices 200 around the user, the voice of the content 262 output from the acoustic output device 200 closest to the user may be reproduced by the hearing aid 100, or the hearing aid processing or the like may be selectively performed on the voice.

Furthermore, in the present embodiment, the hearing aid 100 may control the output of the voice of the content 262 to be reproduced so as to have a volume (or a volume ratio) according to the distance between each acoustic output device 200 and the hearing aid 100. In the present embodiment, for example, in the acoustic output device 200 close to the hearing aid 100 (user), the output of the voice of the content 262 to be reproduced is increased, and in the acoustic output device 200 far from the hearing aid 100 (user), the output of the voice of the content 262 to be reproduced is decreased. In a case where a space (room) in which the user exists can be recognized from the position of the user, the hearing aid 100 may reproduce the content so as to reflect reverberation characteristics of the space in the voice of the content 262 within a range not hindering hearing easiness in order to help the user recognize the arrival direction and distance of the voice of the content 262.

Further, in a case where a direction of a face or a direction of a line of sight of the user can be recognized by an IMU (not illustrated) mounted on the hearing aid 100 or an imaging device (not illustrated) mounted on the information processing terminal 40, the hearing aid processing or the like may be selectively performed on the voice of the content 262 output from the acoustic output device 200 in front of the face or the line of sight of the user. In this way, for example, in a case where the voice of the content 262 is output from both a smartphone (an example of the acoustic output device 200) and a television device (an example of the acoustic output device 200), the user may reproduce the voice of the content 262 output from the device in front of the line of sight of the user by the hearing aid 100.

Furthermore, in the present embodiment, only the acoustic output device 200 satisfying a preset condition may distribute the content 262, or only the hearing aid 100 satisfying a preset condition may reproduce the content 262. For example, the acoustic output device 200 transmits data regarding the condition (for example, identification information or the like for identifying the hearing aid 100 used by a specific user) together with the content 262, and only the hearing aid 100 satisfying the condition reproduces the voice of the content 262, so that it is possible to distribute the content only to the specific user. More specifically, the hearing aid 100 can reproduce only the content 262 from the acoustic output device 200 installed in a specific room, or only the hearing aid 100 used by a customer scheduled to board a specific flight can reproduce the content 262 of the guide broadcast.

### <<4. Second embodiment>>

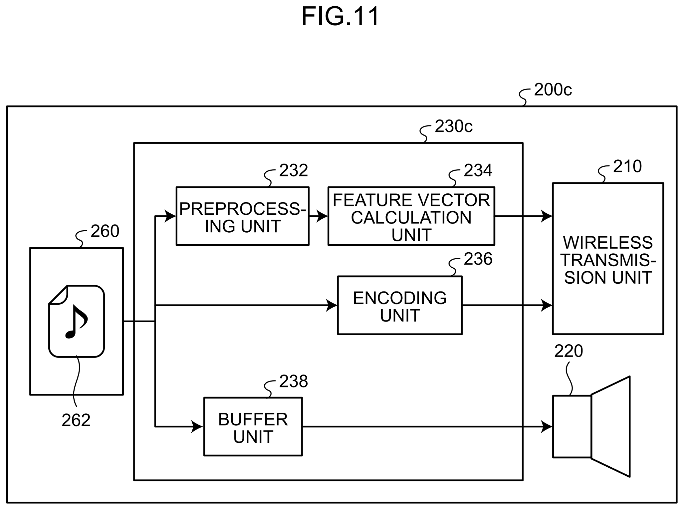

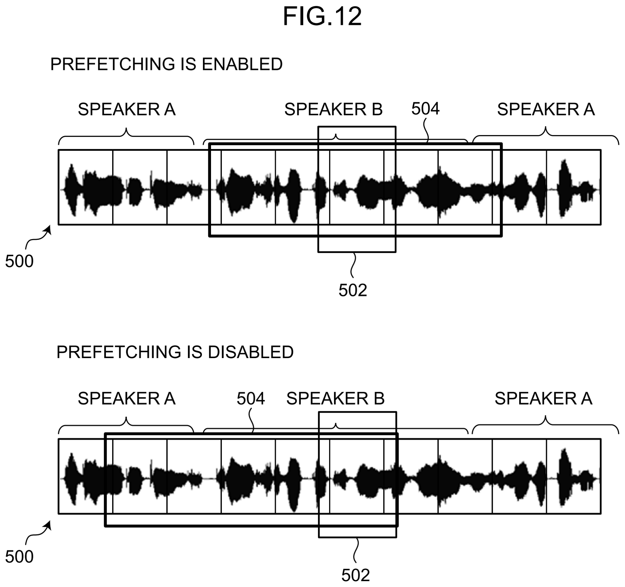

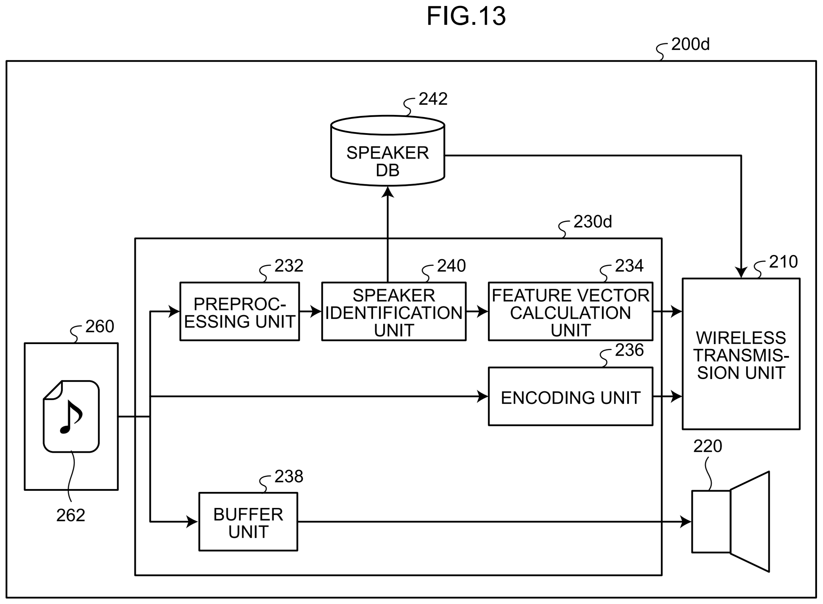

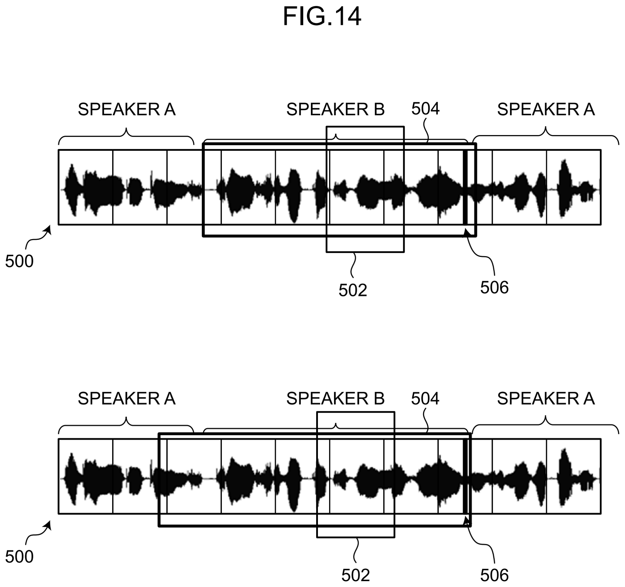

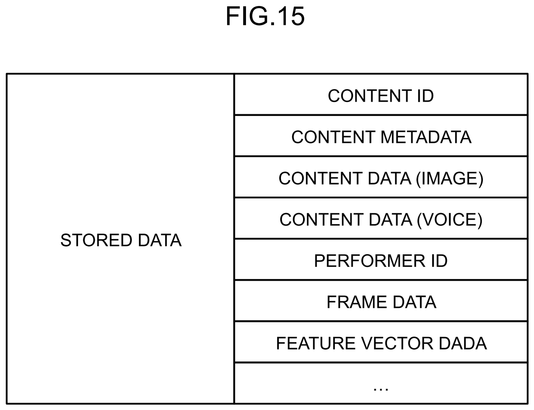

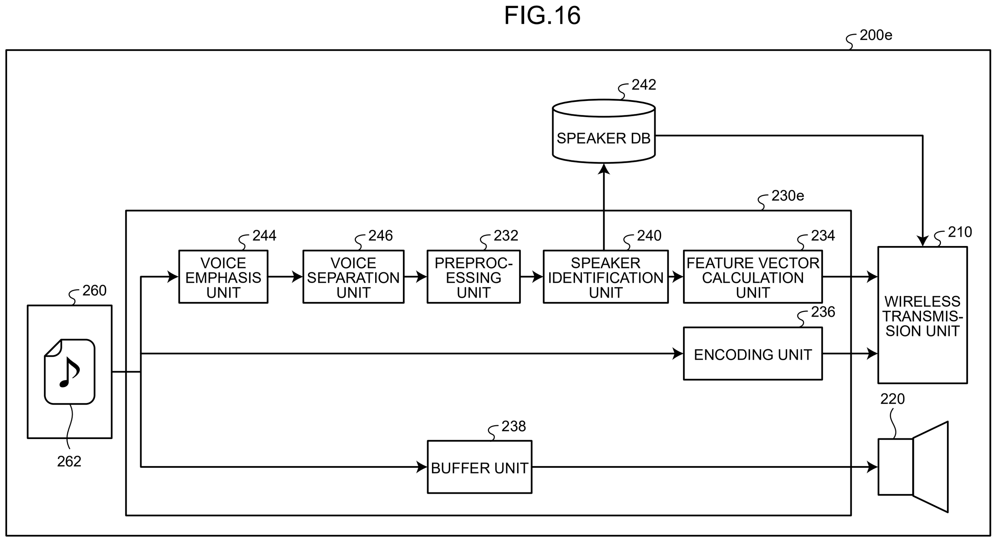

Next, generation of feature vector data according to an embodiment of the present disclosure will be described with reference to FIGS. 11 to 16. FIG. 11 is a block diagram illustrating functional blocks of an acoustic output device 200c according to the present embodiment, and FIG. 12 is an explanatory diagram illustrating a processing method according to the present embodiment. Further, FIG. 13 is a block diagram illustrating functional blocks of an acoustic output device 200d according to the present embodiment, FIG. 14 is an explanatory diagram illustrating a processing method according to the present embodiment, and FIG. 15 is a diagram illustrating an example of data stored in a storage unit 260 of FIG. 13. Furthermore, FIG. 16 is a block diagram illustrating functional blocks of an acoustic output device 200e according to the present embodiment.

FIG. 11 illustrates a configuration in a case where the acoustic output device 200 is provided with a function of generating feature vector data. Specifically, as illustrated in FIG. 11, the acoustic output device 200c mainly includes a wireless transmission unit 210, an output unit 220, a processing unit 230c, and a storage unit 260. Hereinafter, each functional unit of the acoustic output device 200c will be described. However, since the wireless transmission unit 210, the output unit 220, and the storage unit 260 are common to those of the acoustic processing system 5 described with reference to FIG. 7, the description thereof will be omitted here, and only the processing unit 230c will be described.

### (Processing unit 230c)

As illustrated in FIG. 11, the processing unit 230c includes a preprocessing unit 232 that performs preprocessing on a voice signal, and a feature vector calculation unit (generation unit) 234 that generates feature vector data. Specifically, the preprocessing unit 232 can perform, for example, preprocessing of converting a voice signal into, for example, a frequency spectrum. Then, the feature vector calculation unit 234 extracts a feature amount (feature vector data) of a voice of a speaker in the voice signal from the frequency spectrogram using, for example, a long short-term memory (LSTM) encoder.

In the present embodiment, in a case of the same speaker, when the voice is a voice of the corresponding speaker even though the feature vector data is not the same as the details (script) of the content 262 output by the acoustic output device 200, the feature vector data can be generated from the voice. Specifically, in the present embodiment, the same speaker as the speaker in the content 262 can generate the feature vector data using, for example, a voice reading out the details (script) of other content other than the details (script) of the content 262 as a reference voice. Therefore, in the present embodiment, in a case where the speaker in the content 262 to be output by the acoustic output device 200 is assumed in advance, feature vector data is generated in advance for each assumed speaker, and feature vector data of the corresponding speaker is selected from a plurality of pieces of generated feature vector data and transmitted.

For example, in a case where an in-house broadcast is streamed as the content 262, specifically, in a case where the acoustic output device 200 is a speaker that outputs a guide broadcast in the airport, it can be assumed that a speaker of the guide broadcast is limited in advance. Therefore, in the present embodiment, feature vector data is prepared in advance for the speaker and stored in the storage unit 260 of the acoustic output device 200. For example, when the guide broadcast is streamed, the speaker may input speaker identification information for identifying the speaker to an input unit (not illustrated) of the acoustic output device 200, and select and transmit feature vector data corresponding to the speaker identification information from the storage unit 260 simultaneously with streaming of the guide broadcast. When the feature vector data corresponding to the speaker identification information is not stored in advance, the feature vector data may be generated in real time using the voice of the speaker as described later. In such a case, the model may be substituted with feature vector data of a speaker having an attribute close to the attribute (gender, age, language used, and the like) of the speaker.

Specifically, in the present embodiment, the speaker identification information may be input using an operation device (not illustrated) such as a touch panel or a keyboard. Alternatively, in the present embodiment, in a case where a sound collection device (not illustrated) such as a microphone used when the speaker speaks the guide broadcast is determined for each speaker, the sound collection device may collect the voice of the speaker, and at the same time, sound collection device identification information for identifying the sound collection device may be input as the speaker identification information. In addition, in the present embodiment, a voice collected when the speaker speaks the guide broadcast may be analyzed by a speaker recognition device (not illustrated) to perform speaker recognition, thereby inputting a recognition result of the speaker as speaker identification information. At this time, by using the feature vector data prepared in advance, it is possible to recognize the speaker in real time from the voice at the time of speaking the guide broadcast.

Returning to FIG. 11, the processing unit 230c includes an encoding unit 236 that encodes the content 262 for streaming. Further, the processing unit 230c includes a buffer unit 238 for outputting from the output unit 220 with shifted time in consideration of a delay due to streaming of the content 262.

Note that, in the present embodiment, since generation of the feature vector data requires a large calculation resource, the generation is not limited to being processed in the acoustic output device 200. For example, in the present embodiment, the feature vector data may be generated by a server (not illustrated) on a cloud.

If a neural network that generates the feature vector data is already sufficiently learned, the feature vector data of the speaker can be generated substantially in real time as long as a voice that enters in real time can be used for about several seconds.

Further, the present embodiment is not limited to the preparation of the feature vector data in advance, and the feature vector data may be generated in real time using the data of the content 262 to be streamed. For example, a case where a frame 502 is distributed among a plurality of frames having a predetermined time width included in a voice signal 500 of the content 262 streamed by the acoustic output device 200c as illustrated in the upper part of FIG. 12 will be considered. Here, it is assumed that the acoustic output device 200c has a function of prefetching the content 262. In this case, since the frame 502 includes a spoken voice of a speaker B, feature vector data of the speaker B is generated and transmitted together with a voice signal of the frame 502 by analyzing a voice signal of a frame 504 including the frame 502 to be distributed and having a predetermined time length (several seconds) located before and after the frame 502.

In addition, in a case where the acoustic output device 200c does not have the function of prefetching the content 262, as illustrated in the lower part of FIG. 12, the acoustic output device generates feature vector data of the speaker B by analyzing a voice signal of the frame 504 including the frame 502 to be distributed and having a predetermined time length located before the frame 502, and transmits the feature vector data together with the voice signal of the frame 502. Note that, in a case where a voice of a speaker other than the speaker B is included in the frame 504, it is assumed that the generated feature vector data does not accurately reflect the spoken voice of the speaker B. However, in a case where the frame 504 is sufficiently short, there is a low possibility that utterances of a plurality of speakers overlap. Therefore, the generated feature vector data can reflect the spoken voice of the speaker B.

Next, an embodiment will be described in which feature vector data is generated using the frame 504 in which utterances of a plurality of speakers do not overlap. In the embodiment, a speaker is identified from the content 262 to be streamed, a frame including a spoken voice of the identified speaker is specified, and feature vector data is generated from the specified frame.

Specifically, as illustrated in FIG. 13, the acoustic output device 200d mainly includes a wireless transmission unit 210, an output unit 220, a processing unit 230d, and a storage unit 260. As illustrated in FIG. 13, the processing unit 230d includes a preprocessing unit 232, a feature vector calculation unit (generation unit) 234, an encoding unit 236, and a buffer unit 238. Further, the processing unit 230d includes a speaker identification unit 240 and a speaker database (DB) 242. Hereinafter, each functional unit of the processing unit 230d will be described. However, since the preprocessing unit 232, the feature vector calculation unit 234, the encoding unit 236, and the buffer unit 238 are common to those of the processing unit 230c described with reference to FIG. 11, the description thereof will be omitted here, and only the speaker identification unit 240 and the speaker DB 242 will be described.

The speaker identification unit 240 extracts a switching point at which a speaker is switched in the content 262 to be streamed. From speaker identification results for a plurality of frames included in the voice signal 500 of the content 262 to be streamed, the speaker identification unit 240 may determine that the speaker has changed at timing at which a norm of a difference between probability vectors of which speaker it is exceeds a certain threshold, and extract the timing as a switching point. In addition, the speaker identification unit 240 may use feature vector data stored in the speaker DB 242 in advance.

For example, a case where a frame 502 is distributed among a plurality of frames having a predetermined time width included in the voice signal 500 of the content 262 streamed by the acoustic output device 200d as illustrated in the upper part of FIG. 14 will be considered. Here, it is assumed that the acoustic output device 200d has a function of prefetching the content 262. In this case, since the frame 502 includes a spoken voice of the speaker B, the acoustic output device 200d is located after the frame 502, and extracts a switching point 506 at which the spoken voice of the speaker B of the frame 502 ends and the speaker is switched. Furthermore, the acoustic output device 200d generates feature vector data of the speaker B by analyzing a voice signal of a frame 504 having a predetermined time length including a frame going back from the switching point 506 by a predetermined time length (several seconds), and transmits the feature vector data together with the voice signal of the frame 502.

As illustrated in the lower part of FIG. 14, in a case where a spoken voice of another speaker is included in a frame 504 having a predetermined time length including a frame going back from the switching point 506 by a predetermined time length (several seconds), the acoustic output device 200d stops generating the feature vector data and transmits the feature vector data of the speaker B which is already prepared.

Furthermore, in the present embodiment, the feature vector data may be attached to the content 262 created in advance, or data indicating which frame of a voice signal is used to appropriately obtain the feature vector data may also be attached. For example, as illustrated in FIG. 15, there is a case where the storage unit 260 has content metadata indicating a content type, a performer, and the like, and a performer ID for identifying the performer, together with data (image and voice) of the content 262 associated with a content ID for identifying the content. In this case, feature vector data of the performer may be extracted and used from the feature vector data stored in advance based on the performer ID and the metadata. For example, as illustrated in FIG. 15, there is a case where the storage unit 260 has data (frame data) indicating which frame of a voice signal in the content is used to appropriately obtain feature vector data of a specific performer. In this case, the feature vector data of the performer is generated using a voice signal of a frame designated by the frame data.

In addition, in a case where feature vector data is to be generated for each of a plurality of speakers, processing of turning a loop is performed for the above method. In this case, as illustrated in FIG. 16, a processing unit 230e of an acoustic output device 200e is preferably provided with a voice emphasis unit 244 that selectively emphasizes a spoken voice in the content 262 and a voice separation unit 246 that time-separates a voice in the content 262.

Note that the acoustic output device 200 according to the present embodiment is not limited to the configuration illustrated in FIGS. 11, 13, and 16.

### <<5. Third embodiment>>

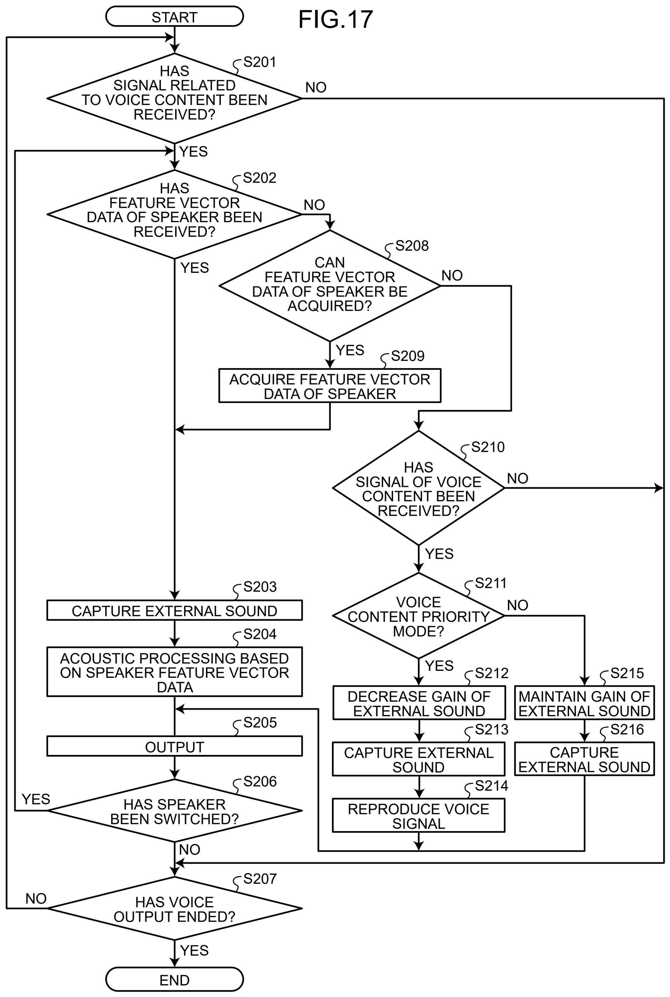

Next, a processing method performed in a hearing aid 100 according to a third embodiment of the present disclosure will be described with reference to FIG. 17. FIG. 17 is a flowchart illustrating a flow of a processing method according to the present embodiment. In the present embodiment, a hearing aid 100 switches processing between a case where received feature vector data is used and a case where the feature vector data is generated by the user's hearing aid 100 or an information processing terminal 40. In addition, in the present embodiment, since it is necessary to switch the feature vector data to be used, the hearing aid 100 also corresponds to speaker switching. Furthermore, in the present embodiment, the hearing aid 100 switches processing between a case of preferentially outputting a voice of a streamed content 262 and a case of preferentially outputting an environmental sound (external sound) from a sound collection unit 120. Specifically, as illustrated in FIG. 17, the processing method according to the present embodiment includes a plurality of steps from step S201 to step S216. Hereinafter, details of each step included in the processing method according to the present embodiment will be described.

The hearing aid 100 determines whether or not a signal related to the content 262 (voice content) has been received (step S201). When it is determined that the signal related to the content 262 has been received (step S201: Yes), the hearing aid 100 proceeds to step S202, and when it is determined that the signal related to the voice content has not been received (step S201: No), the hearing aid 100 proceeds to step S207.

The hearing aid 100 determines whether or not the feature vector data has been received (step S202). When it is determined that the feature vector data has been received (step S202: Yes), the hearing aid 100 proceeds to step S203, and when it is determined that the feature vector data has not been received (step S202: No), the hearing aid 100 proceeds to step S208.

The hearing aid 100 captures an external sound around the user (step S203). Next, the hearing aid 100 performs acoustic processing based on the received feature vector data (step S204). Then, the hearing aid 100 performs hearing aid processing and outputs the processed voice to the user (step S205).

The hearing aid 100 determines whether or not a speaker has been switched (step S206). When it is determined that the speaker has been switched (step S206: Yes), the hearing aid 100 returns to step S202, and when it is determined that the speaker has not been switched (step S206: No), the hearing aid 100 proceeds to step S207.

The hearing aid 100 determines whether or not the voice output has ended (step S207). When it is determined that the voice output has ended (step S207: Yes), the hearing aid 100 ends the processing, and when it is determined that the voice output has not ended (step S207: No), the hearing aid 100 returns to step S201.

The hearing aid 100 determines whether or not a feature vector of the speaker can be acquired (step S208). When it is determined that the feature vector can be acquired (step S208: Yes), the hearing aid 100 proceeds to step S209, and when it is determined that the feature vector cannot be acquired (step S208: No), the hearing aid 100 proceeds to step S210. The hearing aid 100 generates feature vector data from a newly acquired voice signal or acquires feature vector data from a database (not illustrated) or the like, and proceeds to step S203.

The hearing aid 100 determines whether or not data of the content 262 (voice content) has been received (step S210). When it is determined that the data has been received (step S210: Yes), the hearing aid 100 proceeds to step S211, and when it is determined that the data has not been received (step S210: No), the hearing aid 100 proceeds to step S207.

The hearing aid 100 determines whether or not a voice content priority mode is set (step S211). Here, the voice content priority mode refers to a mode in which an operation of prioritizing (emphasizing) the output of the voice of the content 262 is performed in the hearing aid 100. When it is determined that the priority mode is set (step S211: Yes), the hearing aid 100 proceeds to step S212, and when it is determined that the priority mode is not set (step S211: No), the hearing aid 100 proceeds to step S215.

The hearing aid 100 performs setting for decreasing the gain of an external sound (step S212). At this time, in a case where the user sets the gain (volume) of the external sound to zero (does not reproduce the external sound), the hearing aid 100 sets the gain of the external sound to zero. Moreover, the hearing aid 100 captures an external sound around the user (step S213). Next, the hearing aid 100 performs hearing aid processing on the voice of the content 262, reproduces the processed voice to the user (step S214), and proceeds to step S205.

The hearing aid 100 performs setting for maintaining the gain of the external sound (step S215). Moreover, the hearing aid 100 captures the external sound around the user, and proceeds to step S205 (step S216).

Note that the processing method according to the present embodiment is not limited to the flow illustrated in FIG. 15. For example, each step described above may not necessarily be processed in the described order, and each step may be processed in appropriately changed order, or may be processed partially in parallel or individually instead of being processed in time series. Furthermore, in the present embodiment, processing may be switched between a case of preferentially outputting the voice of the streamed content 262 and a case of preferentially outputting the environmental sound (external sound) from the sound collection unit 120 according to the type of the content. For example, in a case where the content is environmental music, the environmental sound (external sound) from the sound collection unit 120 is preferentially output. Further, for example, in a case where the content is news, the voice of the streamed content 262 is preferentially output.

### <<6. Summary>>

As described above, in the embodiment of the present disclosure, the feature vector data, which is the feature amount indicating the feature of the utterance of the speaker speaking in the content 262, is transmitted from the acoustic output device 200 to the hearing aid 100 together with the content 262 as the streaming data or independently. In the present embodiment, the hearing aid 100 does not output the environmental sound around the user collected by the sound collection unit 120 to the user as it is or after performing only the hearing aid processing, but uses the received feature vector data to accurately extract the voice of the content 262 from the environmental sound around the user collected by the sound collection unit 120, and selectively performs the acoustic processing (suppression processing or reverberation suppression processing). Therefore, in the present embodiment, the user can clearly hear the voice of the streamed content 262 output from the hearing aid 100 or the voice of the content 262 included in the environmental sound collected by the sound collection unit 120. Furthermore, in the present embodiment, since the hearing aid 100 does not block the spoken voice and the like included in the environmental sound around the user collected by the sound collection unit 120, the user can clearly hear both the necessary sound among the environmental sounds around the user and the voice of the content 262.

That is, in the embodiment of the present disclosure, even in the scenes described with reference to FIGS. 4 and 5, specifically, the scene where the guide broadcast or the like flown from the speaker installed in the airport or the like is heard through the hearing aid 100, and the scene where the output voice from the television device is heard through the hearing aid 100 in the living room or the like, the user can clearly hear the voice.

Note that, in the above-described embodiment, the hearing aid 100 has been described as being worn on the outer ear of the user, but the present embodiment is not limited thereto, and for example, the hearing aid 100 may be used in a form of being worn on the shoulder or head of the user.

Further, in the present embodiment, the acoustic processing, the generation of the feature vector data, and the like are not limited to being performed by the functional units of the described devices, and can be performed by devices included in the acoustic processing system 5 according to the present embodiment or a server (not illustrated) on a cloud capable of communicating with the devices. Further, these devices may cooperate.

Further, in the description of the embodiment of the present disclosure described above, the case of application to the hearing aid 2 has been described as an example, but the embodiment of the present disclosure can also be applied to other auditory devices (for example, earphones, headphones, and the like).

### <<7. Modification of hearing aid system>>

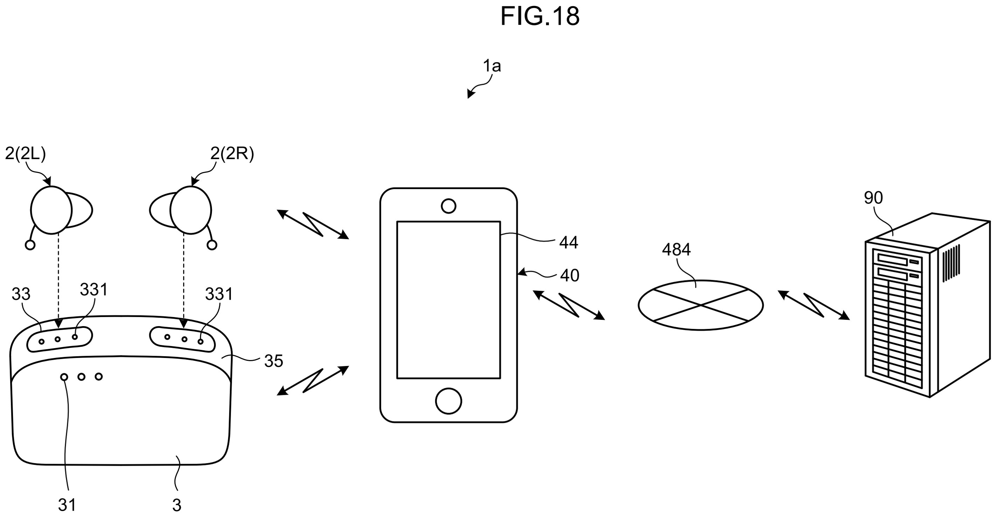

The hearing aid system 1 may include an information processing server. Therefore, a hearing aid system 1a according to a modification of the present embodiment will be described with reference to FIG. 18. FIG. 18 is a diagram illustrating a schematic configuration of the hearing aid system 1a according to the modification of the present embodiment.

As illustrated in FIG. 18, the hearing aid system 1a according to the present modification includes a hearing aid 2, a charger 3 that houses the hearing aid 2 and charges the hearing aid 2, and an information processing terminal 40 including a smartphone or the like capable of communicating with at least one of the hearing aid 2 and the charger 3. Further, the hearing aid system 1a includes a server (information processing server) 90 managed by a sales company, a support service providing company, or the like of the hearing aid 2.

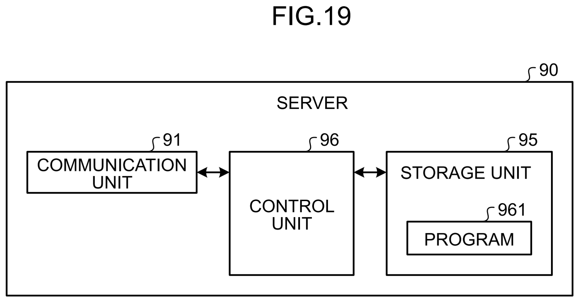

The server 90 may be configured as illustrated in FIG. 19. FIG. 19 is a block diagram of the server 90 according to the present modification. As illustrated in FIG. 19, the server 90 mainly includes a communication unit 91, a storage unit 95, and a control unit 96.

The communication unit 91 communicates with the hearing aid 2 and the information processing terminal 40 via a communication network 484 under the control of the control unit 96. The communication unit 91 can be configured using, for example, a communication module. The storage unit 95 stores various types of information regarding the hearing aid 2. Further, the storage unit 95 stores various programs 961 and the like executed by the server 90. The storage unit 95 can be configured using, for example, a recording medium such as a RAM, a ROM, a flash memory, or a memory card.

The control unit 96 controls each unit forming the server 90. The control unit 96 can be configured using, for example, a memory and a processor having hardware such as a CPU. The control unit 96 reads the program stored in the storage unit 95 in a work area of the memory and executes the program, thereby controlling each component and the like through execution of the program by the processor.

### <<8. Example of data utilization>>

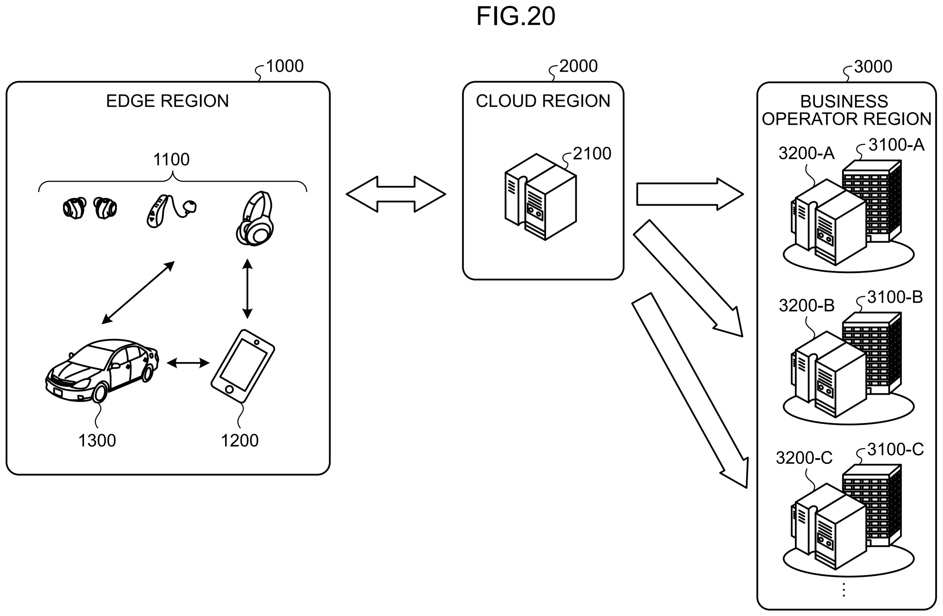

Furthermore, data obtained in connection with the use of the hearing aid 2 may be utilized in various ways. An example thereof will be described with reference to FIG. 20.

FIG. 20 is a diagram illustrating an example of data utilization. In an illustrated system, there are an edge region 1000, a cloud region 2000, and a business operator region 3000. Examples of elements in the edge region 1000 include a sound production device 1100, a peripheral device 1200, and a vehicle 1300. Examples of elements in the cloud region 2000 include a server device 2100. Examples of elements in the business operator region 3000 include a business operator 3100 and a server device 3200.

The sound production device 1100 in the edge region 1000 is used by being worn on the user or arranged near the user so as to emit a sound to the user. Specific examples of the sound production device 1100 can include earphones, a headset (headphones), and a hearing aid. More specifically, the sound production device 1100 can be the hearing aid 2 according to the embodiment of the present disclosure.

The peripheral device 1200 and the vehicle 1300 in the edge region 1000 are devices used together with the sound production device 1100, and transmit signals such as a content viewing sound, a call sound, and a warning sound to the sound production device 1100, for example. The sound production device 1100 outputs a sound corresponding to a signal from the peripheral device 1200 or the vehicle 1300 to the user. Specific examples of the peripheral device 1200 include a smartphone. For example, the information processing terminal 40 described above with reference to FIG. 1 may be used as the peripheral device 1200.

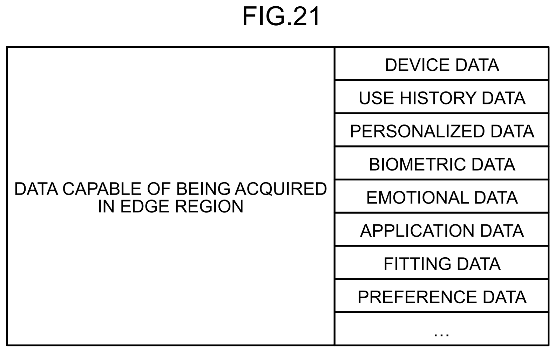

Within the edge region 1000, various data regarding utilization of the sound production device 1100 can be obtained. A description will be given with reference to FIG. 21.

FIG. 21 is a diagram illustrating an example of data. Examples of data that can be acquired in the edge region 1000 include device data, use history data, personalized data, biometric data, emotional data, application data, fitting data, and preference data. Note that the data may be understood as the meaning of information, and may be appropriately read as long as there is no contradiction. Various known methods may be used to acquire the exemplified data.

The device data is data regarding the sound production device 1100, and includes, for example, type data of the sound production device 1100, specifically, data identifying that the sound production device 1100 is an earphone, a headphone, a TWS (True Wireless Stereo), a hearing aid (CIC, ITE, RIC, etc.), or the like.

The use history data is use history data of the sound production device 1100, and includes, for example, data such as a music exposure dose, a continuous use time of a hearing aid, and a content viewing history (a viewing time and the like). The use history data can be used for safe listening, hearing aid adaptation of TWS, replacement notification of an earwax intrusion prevention filter (not illustrated) provided in the hearing aid 2, and the like.

The personalized data is data regarding the user of the sound production device 1100, and includes, for example, a head related transfer function (HRTF), an external auditory canal characteristic, a type of earwax, and the like of an individual user. Furthermore, data such as hearing may also be included in the personalized data.

The biometric data is biometric data of the user of the sound production device 1100, and includes, for example, data such as perspiration, blood pressure, blood flow, heart rate, pulse, body temperature, brainwave, respiration, and myoelectric potential.

The emotional data is data indicating the emotion of the user of the sound production device 1100, and includes, for example, data indicating comfort, discomfort, or the like.

The application data is data used in various applications, and includes, for example, user attribute information data such as a position of the user of the sound production device 1100 (or a position of the sound production device 1100), schedule, age, and gender, and data such as weather, atmospheric pressure, and temperature. For example, the position data can be used to search for the lost sound production device 1100 or to determine a timing to predict clogging of the above-described earwax intrusion prevention filter (not illustrated).

The fitting data can include, for example, adjustment parameters of the hearing aid 2 used by the user, and a hearing aid gain for each frequency band set based on a hearing measurement result (audiogram) of the user and the like.

The preference data is data regarding the preference of the user, and includes, for example, data such as the preference of music to listen during driving.

Note that data of a communication situation, data of a charging situation of the sound production device 1100, and the like may also be acquired. A part of the processing in the edge region 1000 may be executed by the cloud region 2000 according to the band, the communication situation, the charging situation, and the like. By sharing the processing, the processing load in the edge region 1000 is reduced.

Returning to FIG. 20, for example, the data described above is acquired in the edge region 1000 and transmitted from the sound production device 1100, the peripheral device 1200, or the vehicle 1300 to the server device 2100 in the cloud region 2000. The server device 2100 stores (storage, accumulation, etc.) the received data.

The business operator 3100 in the business operator region 3000 uses the server device 3200 to acquire data from the server device 2100 in the cloud region 2000. The data can be used by the business operator 3100.

There may be various business operators 3100. Specific examples of the business operator 3100 are a hearing aid store, a hearing aid manufacturer, a content production company, a distribution business operator providing a music streaming service, and the like, which are referred to as a business operator 3100-A, a business operator 3100-B, and a business operator 3100-C so as to distinguish them. The corresponding server device 3200 is referred to as a server device 3200-A, a server device 3200-B, and a server device 3200-C in the drawing. Various data are provided to such various business operators 3100, and utilization of the data is promoted. The data provision to the business operator 3100 may be, for example, data provision by subscription, recall, or the like.

Data can also be provided from the cloud region 2000 to the edge region 1000. For example, in a case where machine learning is required to realize processing in the edge region 1000, data for feedback, correction (Revise), and the like of learning data is prepared by an administrator or the like of the server device 2100 in the cloud region 2000. The prepared data is transmitted from the server device 2100 to the sound production device 1100, the peripheral device 1200, or the vehicle 1300 in the edge region 1000.

In a case where a specific condition is satisfied in the edge region 1000, some incentive (benefit such as premium service) may be provided to the user. An example of the condition is a condition that at least some devices of the sound production device 1100, the peripheral device 1200, and the vehicle 1300 are devices provided by the same business operator. In a case of an incentive (electronic coupon or the like) that can be electronically supplied, the incentive may be transmitted from the server device 2100 to the sound production device 1100, the peripheral device 1200, or the vehicle 1300.

### <<9. Example of cooperation with another device>>

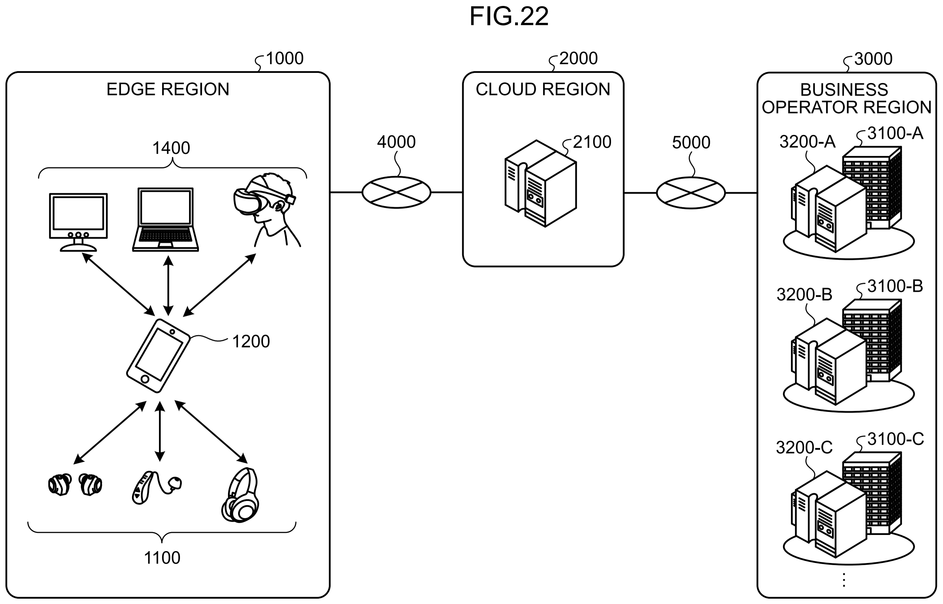

In the edge region 1000, for example, the sound production device 1100 may cooperate with another device using the peripheral device 1200 such as a smartphone as a hub. An example will be described with reference to FIG. 22.

FIG. 22 is a diagram illustrating an example of cooperation with another device. The edge region 1000, the cloud region 2000, and the business operator region 3000 are connected by a network 4000 and a network 5000. A smartphone is exemplified as the peripheral device 1200 in the edge region 1000, and another device 1400 is also exemplified as an element in the edge region 1000. Note that illustration of the vehicle 1300 (FIG. 20) is omitted.

The peripheral device 1200 can communicate with each of the sound production device 1100 and another device 1400. The communication method is not particularly limited, but for example, Bluetooth LDAC, Bluetooth LE Audio described above, or the like may be used. Communication between the peripheral device 1200 and another device 1400 may be multicast communication. An example of the multicast communication is Auracast (registered trademark) or the like.

Another device 1400 is used in cooperation with the sound production device 1100 via the peripheral device 1200. Specific examples of another device 1400 can include a television, a personal computer (PC), a head mounted display (HMD), a robot, a smart speaker, and a gaming device.

Even in a case where the sound production device 1100, the peripheral device 1200, and another device 1400 satisfy a specific condition (for example, a condition that at least some thereof are provided by the same business operator), an incentive may be provided to the user.

The sound production device 1100 and another device 1400 can cooperate with the peripheral device 1200 as a hub. The cooperation may be performed using various data stored in the server device 2100 in the cloud region 2000. For example, information such as fitting data, viewing time, and hearing of the user is shared between the sound production device 1100 and another device 1400, whereby volume adjustment and the like of each device are performed in cooperation. When the hearing aid 2 (HA) or the sound collector (PSAP: Personal Sound Amplification Product) is worn, setting for the hearing aid 2 or the PSAP can be automatically performed on the television, the PC, or the like. For example, when the user who uses the hearing aid 2 uses another device such as the television or the PC, processing of automatically changing the setting of another device may be performed such that the setting normally intended for people who have normal hearing can be changed to the setting suitable for users who use the hearing aid. Note that whether or not the user uses the hearing aid 2 may be determined by automatically sending information indicating that the user has worn the hearing aid 2 (for example, wearing detection information) to a device such as the television or the PC as a pairing destination of the hearing aid 2 when the user wears the hearing aid 2, or may be detected by using, as a trigger, the user who uses the hearing aid approaching another device such as the television or the PC as a target. Further, it may be determined that the user uses the hearing aid by imaging the face of the user with a camera or the like provided in another device such as the television or the PC, or determination may be performed by other method described above. Further, for example, the hearing aid 2, which is the sound production device 1100, and another device 1400 cooperate with each other, so that the hearing aid 2 can be caused to function as an earphone. In a case where another device 1400 includes a microphone that collects an ambient sound, an earphone that is the sound production device 1100 can be caused to function as the hearing aid 2. In this case, the function of the hearing aid can be used in a style (appearance or the like) as if listening to music. The earphone/headphone and the hearing aid have many overlapping parts from the technical viewpoint, and it is assumed that the barrier between the earphone/headphone and the hearing aid disappears in the future, and one device has functions of both the earphone and the hearing aid. When people have normal hearing, they can enjoy the content viewing experience by using the device as the normal earphone/headphone, and when hearing deteriorates due to aging or the like, the device can be caused to function as the hearing aid by turning on the hearing function. Since a device as the earphone can be used as the hearing aid as it is, continuous and long-term use by the user can be expected even from the viewpoint of appearance and design.

Data of the viewing history of the user may be shared. Long viewing can be a risk for future hearing loss. A notification or the like to the user may be performed so as to prevent excessive long viewing. For example, when the viewing time exceeds a predetermined threshold, such a notification is performed (safe listening). The notification may be performed by any device in the edge region 1000.

At least some of the devices used in the edge region 1000 may be provided by different business operators. Information regarding the device setting and the like of each business operator may be transmitted from the server device 3200 in the business operator region 3000 to the server device 2100 in the cloud region 2000 and stored in the server device 2100. By using such information, cooperation between the devices provided by the different business operators is also enabled.

### <<10. Example of application transition>>

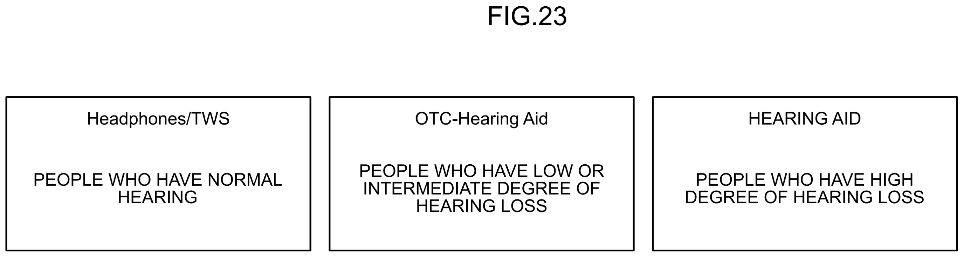

The application of the sound production device 1100 can transition according to various situations including the fitting data, the viewing time, the hearing, and the like of the user as described above. An example will be described with reference to FIG. 23.

FIG. 23 is a diagram illustrating an example of application transition. When the user is a person who has normal hearing, for example, while the user is a child and for a while after the user becomes an adult, the sound production device 1100 is used as headphones or earphones (headphones/TWS). In addition to the safe listening described above, adjustment of the equalizer and processing (for example, a mode is switched to an optimal noise canceling mode for a scene in which the user is at a restaurant and a scene in which the user is on a vehicle) according to the user's behavior characteristic, current location, and external environment are performed, and collection of a listening music log and the like are performed. Communication between devices using Auracast is also used.

As the user's hearing deteriorates, the hearing aid function of the sound production device 1100 begins to be used. For example, while the user is a person who has a low or intermediate degree of hearing loss, the sound production device 1100 is used as an over the counter hearing aid (OTC hearing aid). When the user is a person who has a high degree of hearing loss, the sound production device 1100 is used as a hearing aid. Note that the OTC hearing aid is a hearing aid that is sold at a store without going through an expert, and has the ease of purchase without going through an expert such as a hearing test or an audiologist. A specific operation of the hearing aid such as fitting may be performed by the user. While the sound production device 1100 is used as an OCT hearing aid or a hearing aid, hearing measurement is performed or a hearing aid function is turned on. For example, a function such as transmission of an utterance flag in the above-described embodiment can also be used. In addition, various types of information regarding hearing (hearing big data) are collected, fitting, sound environment adaptation, remote support, and the like are performed, and a transcription is performed.

### <<11. Supplement>>

The preferred embodiments of the present disclosure have been described above in detail with reference to the accompanying drawings, but the technical scope of the present disclosure is not limited to such examples. It is obvious that a person with an ordinary skill in a technological field of the present disclosure could conceive of various alterations or corrections within the scope of the technical ideas described in the appended claims, and it should be understood that such alterations or corrections will naturally belong to the technical scope of the present disclosure.

Furthermore, the effects described in the present specification are merely illustrative or exemplary and are not restrictive. That is, the technology according to the present disclosure can exhibit other effects obvious to those skilled in the art from the description of the present specification in addition to or in place of the above effects.

Note that the present technology can also take the following configurations.
(1) An acoustic processing device that is worn on a body of a user, the acoustic processing device comprising:
   a sound collection unit that acquires an environmental sound around the user;
   a reception unit that receives feature information for a specific voice included in a voice output from an acoustic output device to the user;
   a processing unit that performs acoustic processing on the environmental sound around the user collected by the sound collection unit based on the feature information; and
   an output unit that outputs the environmental sound processed by the processing unit to the user.
(2) The acoustic processing device according to (1), wherein the processing unit performs reverberation suppression processing on the specific voice included in the environmental sound collected by the sound collection unit based on the feature information.
(3) The acoustic processing device according to (2), wherein the processing unit performs hearing aid processing on the specific voice included in the environmental sound collected by the sound collection unit.
(4) The acoustic processing device according to (1), wherein
   the reception unit receives data of the voice,
   the processing unit performs suppression processing on the specific voice included in the environmental sound collected by the sound collection unit based on the feature information, and
   the output unit outputs the environmental sound processed by the processing unit to the user together with the voice based on the received data of the voice.
(5) The acoustic processing device according to (4), wherein the processing unit performs hearing aid processing on the specific voice included in the received data of the voice.
(6) The acoustic processing device according to any one of (2) to (5), wherein
   the processing unit performs suppression processing on a noise included in the environmental sound collected by the sound collection unit.
(7) The acoustic processing device according to any one of (2) to (6), wherein the processing unit performs hearing aid processing on a spoken voice included in the environmental sound collected by the sound collection unit.
(8) The acoustic processing device according to any one of (1) to (7), wherein
   the feature information is feature vector data indicating a feature of an utterance of a speaker of the utterance included in the voice.
(9) The acoustic processing device according to any one of (1) to (8), wherein the acoustic processing device is a hearing aid.
(10) An information transmission device comprising:
   a transmission unit that transmits, to an acoustic processing device worn on a body of a user, feature information for a specific voice included in a voice output from an acoustic output device to the user, wherein
   the feature information is used to perform acoustic processing on an environmental sound around the user collected by the acoustic processing device.
(11) The information transmission device according to (10), wherein the transmission unit distributes data of the voice to the acoustic processing device together with the feature information.
(12) The information transmission device according to (10), further comprising:
   a storage unit that previously stores a plurality of pieces of the feature information for each of a plurality of speakers speaking in the voice.
(13) The information transmission device according to (12), wherein
   when speaker identification information for identifying the speaker is input, the transmission unit extracts the feature information of the speaker corresponding to the input speaker identification information from the storage unit, and transmits the feature information.
(14) The information transmission device according to (13), wherein a recognition result of a speaker recognition device that recognizes a speaker from a newly acquired spoken voice is input as the speaker identification information.
(15) The information transmission device according to (13), wherein from a sound collection device used by a speaker speaking newly, sound collection device identification information for identifying the sound collection device is input as the speaker identification information.
(16) The information transmission device according to (12), further comprising:
   a generation unit that generates the feature information.
(17) The information transmission device according to (16), wherein
   the generation unit previously generates the feature information of the speaker from a reference voice that is a spoken voice of a script other than a script corresponding to the voice of the speaker.
(18) The information transmission device according to (16), wherein
   the generation unit generates the feature information of a predetermined speaker in real time from a spoken voice of the predetermined speaker for a predetermined time among spoken voices of a plurality of speakers included in the voice.
(19) The information transmission device according to any one of (10) to (18), further comprising:
   an output unit that outputs the voice to the user.
(20) An acoustic processing system comprising:
   an acoustic output device that outputs a voice to a user;
   an acoustic processing device that is worn on a body of the user; and
   an information transmission device that transmits feature information for a specific voice included in the voice to the acoustic processing device, wherein
   the acoustic processing device includes
   a sound collection unit that acquires an environmental sound around the user,
   a reception unit that receives the feature information for the specific voice included in the voice output from the acoustic output device to the user,
   a processing unit that performs acoustic processing on the environmental sound around the user collected by the sound collection unit based on the feature information, and
   an output unit that outputs the environmental sound processed by the processing unit to the user.

### Reference Signs List

- 1, 1a: HEARING AID SYSTEM
- 2, 100, 100a, 100b: HEARING AID
- 3: CHARGER
- 5, 5a, 5b: ACOUSTIC PROCESSING SYSTEM
- 20, 20b, 20f, 120: SOUND COLLECTION UNIT
- 21: SIGNAL PROCESSING UNIT
- 22, 43, 150, 220: OUTPUT UNIT
- 25, 32: BATTERY
- 26, 331: CONNECTION UNIT
- 27, 30, 34, 42, 91: COMMUNICATION UNIT
- 28, 35, 45, 95, 260: STORAGE UNIT
- 29, 36, 46, 96: CONTROL UNIT
- 31, 44: DISPLAY UNIT
- 33: HOUSING UNIT
- 40: INFORMATION PROCESSING TERMINAL
- 41: INPUT UNIT
- 90: SERVER
- 110, 110a, 110b: WIRELESS RECEPTION UNIT
- 130, 132, 134: VOICE HEARING AID PROCESSING UNIT
- 136, 138: ACOUSTIC PROCESSING UNIT
- 140: ADJUSTMENT UNIT
- 200, 200a, 200b, 200c, 200d, 200e: ACOUSTIC OUTPUT DEVICE
- 201: MICROPHONE
- 202: A/D CONVERTER
- 210, 210a, 210b: WIRELESS TRANSMISSION UNIT
- 221: D/A CONVERTER
- 222: RECEIVER
- 230, 230c, 230d, 230e: PROCESSING UNIT
- 232: PREPROCESSING UNIT
- 234: FEATURE VECTOR CALCULATION UNIT
- 236: ENCODING UNIT
- 238: BUFFER UNIT
- 240: SPEAKER IDENTIFICATION UNIT
- 242: SPEAKER DB
- 244: VOICE EMPHASIS UNIT
- 246: VOICE SEPARATION UNIT
- 262: CONTENT
- 281, 351, 451, 961: PROGRAM
- 282: DATA
- 484: COMMUNICATION NETWORK
- 500: VOICE SIGNAL
- 502, 504: FRAME
- 506: SWITCHING POINT
- 1000: EDGE REGION
- 1100: SOUND PRODUCTION DEVICE
- 1200: PERIPHERAL DEVICE
- 1300: VEHICLE
- 1400: ANOTHER DEVICE
- 2000: CLOUD REGION
- 2100, 3200: SERVER DEVICE
- 3000: BUSINESS OPERATOR REGION
- 3100: BUSINESS OPERATOR
- 4000, 5000: NETWORK

## Claims

1. An acoustic processing device that is worn on a body of a user, the acoustic processing device comprising:
a sound collection unit that acquires an environmental sound around the user;
a reception unit that receives feature information for a specific voice included in a voice output from an acoustic output device to the user;
a processing unit that performs acoustic processing on the environmental sound around the user collected by the sound collection unit based on the feature information; and
an output unit that outputs the environmental sound processed by the processing unit to the user.

2. The acoustic processing device according to claim 1, wherein the processing unit performs reverberation suppression processing on the specific voice included in the environmental sound collected by the sound collection unit based on the feature information.

3. The acoustic processing device according to claim 2, wherein the processing unit performs hearing aid processing on the specific voice included in the environmental sound collected by the sound collection unit.

4. The acoustic processing device according to claim 1, wherein
the reception unit receives data of the voice,
the processing unit performs suppression processing on the specific voice included in the environmental sound collected by the sound collection unit based on the feature information, and
the output unit outputs the environmental sound processed by the processing unit to the user together with the voice based on the received data of the voice.

5. The acoustic processing device according to claim 4, wherein the processing unit performs hearing aid processing on the specific voice included in the received data of the voice.

6. The acoustic processing device according to claim 2, wherein
the processing unit performs suppression processing on a noise included in the environmental sound collected by the sound collection unit.

7. The acoustic processing device according to claim 2, wherein the processing unit performs hearing aid processing on a spoken voice included in the environmental sound collected by the sound collection unit.

8. The acoustic processing device according to claim 1, wherein
the feature information is feature vector data indicating a feature of an utterance of a speaker of the utterance included in the voice.

9. The acoustic processing device according to claim 1, wherein the acoustic processing device is a hearing aid.

10. An information transmission device comprising:
a transmission unit that transmits, to an acoustic processing device worn on a body of a user, feature information for a specific voice included in a voice output from an acoustic output device to the user, wherein
the feature information is used to perform acoustic processing on an environmental sound around the user collected by the acoustic processing device.

11. The information transmission device according to claim 10, wherein the transmission unit distributes data of the voice to the acoustic processing device together with the feature information.

12. The information transmission device according to claim 10, further comprising:
a storage unit that previously stores a plurality of pieces of the feature information for each of a plurality of speakers speaking in the voice.

13. The information transmission device according to claim 12, wherein
when speaker identification information for identifying the speaker is input, the transmission unit extracts the feature information of the speaker corresponding to the input speaker identification information from the storage unit, and transmits the feature information.

14. The information transmission device according to claim 13, wherein a recognition result of a speaker recognition device that recognizes a speaker from a newly acquired spoken voice is input as the speaker identification information.

15. The information transmission device according to claim 13, wherein from a sound collection device used by a speaker speaking newly, sound collection device identification information for identifying the sound collection device is input as the speaker identification information.

16. The information transmission device according to claim 12, further comprising:
a generation unit that generates the feature information.

17. The information transmission device according to claim 16, wherein
the generation unit previously generates the feature information of the speaker from a reference voice that is a spoken voice of a script other than a script corresponding to the voice of the speaker.

18. The information transmission device according to claim 16, wherein
the generation unit generates the feature information of a predetermined speaker in real time from a spoken voice of the predetermined speaker for a predetermined time among spoken voices of a plurality of speakers included in the voice.

19. The information transmission device according to claim 10, further comprising:
an output unit that outputs the voice to the user.

20. An acoustic processing system comprising:
an acoustic output device that outputs a voice to a user;
an acoustic processing device that is worn on a body of the user; and
an information transmission device that transmits feature information for a specific voice included in the voice to the acoustic processing device, wherein
the acoustic processing device includes
a sound collection unit that acquires an environmental sound around the user,
a reception unit that receives the feature information for the specific voice included in the voice output from the acoustic output device to the user,
a processing unit that performs acoustic processing on the environmental sound around the user collected by the sound collection unit based on the feature information, and
an output unit that outputs the environmental sound processed by the processing unit to the user.
